# EUROPEAN PATENT APPLICATION

(11) **EP 2 048 639 A1**
(43) Date of publication of application: **15.04.2009**
(21) Application number: 06780889.9
(22) Date of filing: 07.07.2006
(51) Int. Cl.: G09B 7/00, G06Q 50/00, G09B 19/00

(54) **HUMAN RESOURCE DEVELOPMENT SUPPORT SYSTEM, HUMAN RESOURCE DEVELOPMENT SUPPORT METHOD, AUTOMATIC APPLICATION SYSTEM, AUTOMATIC APPLICATION METHOD, AND RECORDER**

(71) Applicant: Ricoh Company, Ltd, Ohta-ku Tokyo 143-8555 (JP); Knowledge Edge, K.K., Tokyo 107-0061 (JP)
(72) Inventor: KOBAYASHI, Hideaki, Tokyo 107-0061 (JP)
(74) Representative: Schwabe - Sandmair - Marx
(86) International application number: PCT/JP2006/313614
(87) International publication number: WO 2008/004310

(57) **Abstract**

A human-resource-development assisting system comprises a human-resource-development assisting device (1), a database (2), a communication network (3), user terminals (4) and company terminals (5). The human-resource-development assisting device (1) has target level setting means (11) for setting the target level of a learning, training information providing means (12) for providing training information to acquire the level set by the target level setting means (11), and proficiency level determination means (13) for determining the proficiency of a skill learned through the training information provided from the training information providing means (12).

## Description

### Technical Field

The present invention relates to a human-resource-development assisting system and a human-resource-development assisting method which assist the development of human resources in a company, a school or the like.
Moreover, the present invention relates to an application system and an application method which assist an application work to companies.
Further, the present invention relates to a recording device which enables simple and safe access to the foregoing human-resource-development assisting system and application system.

### Background Art

Development of human resources in a company, a school or the like is important from the standpoint of improving the abilities, skills/learnings of employees or students, and various systems which assist the development of human resources are proposed so far.

For example, patent literature 1 discloses a human-resource-development assisting system which causes a user who voluntarily wants to improve a skill to answer predetermined questions, examines the skill of the user based on the result of answers, and provides human-resource-development information like an educational guidance to the user based on the examined skill.

Regarding the determination of a skill, for example, patent literature 2 discloses a device which stores problems and answers in the memory unit of an educational device beforehand, causes a user subjected to education to input answers, and determines whether or not the answers are correct or wrong.
Patent Literature 1: Unexamined Japanese Patent Application KOKAI Publication No. 2002-258736
Patent Literature 2: Unexamined Japanese Patent Application KOKAI Publication No. H5-134595

### Disclosure of Invention

### Problems to be solved by the invention

Departments of human resource development in companies create predetermined upskilling programs for human-resource-developments (e.g., skill up) to employees, and educate the employees based on the created upskilling programs. Such upskilling programs vary company by company. Skills/learnings required for the employees vary company by company, and department by department where the employee belongs. Further, it is desirable that such programs should be used not only for the purpose of a human-resource-development, but also for, for example, selecting a talented human resource from educated human resources to post that human resource to the most appropriate department, and for a selection in an employment exam. Therefore, a human-resource-development assisting system which assists the training of human resources and makes a contribution to the selection of talented human resources is demanded. Further, an essential problem for companies for a long time is a mismatching between human resources (skills) that the companies seek and the skills of students who apply to those companies to get a job. For example, employment exams for recruiting students are carried out within a short time like one to three hours, and because the skills of students must be determined within such a short time, a problem arises.

In a case where students or the like apply to individual companies, it is necessary for the individual companies to provide large amounts of information to get truly talented students, and it is necessary for the students to collect the large amounts of information and to file an application individually. Therefore, it is inefficient so far. Accordingly, an application system which is more efficient and simple is demanded.
Further, it is not to say that all students can always carry their own computers, and it is necessary in some cases to access an educational or recruitment website through a computer at a school, an Internet cafe, and the like. In this case, there is a risk that personal information leaks.

The present invention has been made in view of the foregoing circumstances, and it is an object of the invention to provide a human-resource-development assisting system and a human-resource-development assisting method which assist the development of human resources and to make a contribution to the selection of talented human resources.
Moreover, it is another object of the invention to provide an application system which is efficient and simple for both applicant and recruiter.
Further, it is the other object of the invention to reduce the risk that personal information leaks.

### Means for solving the problem

To acquire the objects, a human-resource-development assisting system according to the first aspect of the invention comprises:
first target level setting means for setting a target level of a learning;
training information providing means for providing training information to acquire a level set by the first target level setting means; and
proficiency level determination means for determining a proficiency level of a skill acquired from training information provided by the training information providing means.

A human-resource-development assisting system according to the second aspect of the invention comprises:
first target level setting means for setting a target level of a learning;
training information providing means for providing training information to acquire a level set by the first target level setting means;
proficiency level determination means for determining a proficiency level of a skill acquired from training information provided by the training information providing means; and
instruction means for giving an instruction on an acquisition from training information provided by the training information providing means until a first target level is acquired when a determined level determined by the proficiency level determination means is lower than a level set by the first target level setting means.

A human-resource-development assisting system according to the third aspect of the invention comprises:
second target level setting means for setting a target level having a higher level than first target level setting means for setting a target level of a learning;
training information providing means for providing training information to acquire a level set by the second target level setting means; and
proficiency level determination means for determining a proficiency level of a skill acquired from training information provided by the training information providing means.

A human-resource-development assisting system according to the fourth aspect of the invention comprises:
second target level setting means for setting a target level having a higher level than first target level setting means for setting a target level of a learning;
training information providing means for providing training information to acquire a level set by the second target level setting means;
proficiency level determination means for determining a proficiency level of a skill acquired from training information provided by the training information providing means; and
instruction means for giving an instruction on an acquisition from training information provided by the training information providing means until a second target level is acquired when a determined level determined by the proficiency level determination means is lower than a level set by the second target level setting means.

The human-resource-development assisting system may further comprise means for granting a credit when a proficiency level is higher than a first target level upon determination by the proficiency level determination means.
The human-resource-development assisting system may further comprise means for granting a reward when a proficiency level is higher than a second target level upon determination by the proficiency level determination means.

The human-resource-development assisting system may further comprise means for granting a credit and a reward when a proficiency level is higher than a second target level upon determination by the proficiency level determination means.

A human-resource-development assisting system according to the fifth aspect of the invention comprises:
skill/learning kind/target level set value input means for setting a kind and a target level of a skill/learning;
skill/learning current level determination means for determining a current level of a skill/learning corresponding to the kind of the skill/learning;
skill/learning level difference calculation means for calculating a difference between a target level of a skill/learning and a current level of a skill/learning;
training information providing means for providing training information to clear a difference calculated by the skill/learning level difference calculation means;
training period setting means for setting a training period on the training information;
skill/learning proficiency level determination means for determining a proficiency level of a skill/learning acquired from training information provided by the training information providing means after a training period set by the training period setting means ends; and
skill/learning level comparison means for comparing a proficiency level of a skill/learning determined by the skill/learning proficiency level determination means with a target level of a skill/learning set by the skill/learning kind/target level set value input means.

A human-resource-development assisting system according to the sixth aspect of the invention comprises:
skill/learning kind/target level set value input means for setting a kind and a target level of a skill/learning for accomplishing a business purpose;
skill/learning current level determination means for determining a current level of a skill/learning corresponding to the kind of the skill/learning;
skill/learning level difference calculation means for calculating a difference between a target level of a skill/learning and a current level of a skill/learning;
training information providing means for providing training information to clear a difference calculated by the skill/learning level difference calculation means;
skill/learning proficiency level determination means for determining a proficiency level of a skill/learning acquired from training information provided by the training information providing means; and
skill/learning level achievement level determination means for comparing a proficiency level of a skill/learning determined by the skill/learning proficiency level determination means with a target level of a skill/learning set by the skill/learning kind/target level set value input means, and determining an achievement level.

The human-resource-development assisting system may further comprise credit granting display means for displaying a granting of a credit when a proficiency level is higher than a target level of a skill/learning input by the skill/learning kind/target level set value input means upon determination of the skill/learning level achievement level determination means.

The human-resource-development assisting system may further comprise reward amount display means for displaying a predetermined reward amount when a proficiency level is higher than a target level of a skill/learning input by the skill/learning kind/target level set value input means.

The human-resource-development assisting system may further comprise credit granting display means for displaying a granting of a credit and reward amount display means for displaying a predetermined reward amount when a proficiency level is higher than a target level of a skill/learning input by the skill/learning kind/target level set value input means.

The human-resource-development assisting system may further comprise instruction means for giving an instruction on an acquisition from training information provided by the training information providing means when a proficiency level through the skill/learning level achievement level determination means is lower than a target level of a skill/learning input by the skill/learning kind/target level set value input means.

The human-resource-development assisting system may further comprise instruction means for giving an instruction on an acquisition from training information provided by the training information providing means until a proficiency level exceeds a target level of a skill/learning when the proficiency level determined by the skill/learning level achievement level determination means is lower than a target level of a skill/learning input by the skill/learning kind/target level set value input means.

A target level of a skill/learning input by the skill/learning kind/target level set value input means is, for example, a basic requisite level to acquire a target level of a predetermined skill/learning.

The skill/learning proficiency level determination means comprises, for example, a plurality of evaluation/determination means.

The skill/learning proficiency level determination means is constituted by, for example, an evaluation/determination system comprised of a best combination of plural evaluation/determination means.

A target level of a skill/learning input by the skill/learning kind/target level set value input means is, for example, a specific requisite level necessary for being capable of development and designing in a company to accomplish a business purpose.

The human-resource-development assisting system may further comprise examination means for performing examination regarding recruitment in a company when a proficiency level of a skill/learning determined by the skill/learning proficiency level determination means is higher than a specific requisite level input by the skill/learning kind/target level set value input means.

It is preferable that the evaluation/determination system should be updated to a latest state.

An inputting of a kind and a target level of a skill/learning by the skill/learning kind/target level set value input means, a determination of a current level of a skill/learning by the skill/learning current level determination means, a calculation of a difference by the skill/learning level difference calculation means, a provision of training information by the training information providing means, a determination of a proficiency level of a skill/learning by the skill/learning proficiency level determination means, and a comparison of a proficiency level with a target level by the skill/learning level comparison means are executed through, for example, network communication means.

A human-resource-development assisting method according to the seventh aspect of the invention comprises:
a skill/learning kind/target level set value input step for setting a kind and a target level of a skill/learning;
a skill/learning current level determination step of determining a current level of a skill/learning corresponding to the kind of the skill/learning;
a skill/learning level difference calculation step of calculating a difference between a target level of a skill/learning and a current level of a skill/learning;
a training information providing step of providing training information to clear a difference calculated at the skill/learning level difference calculation step;
a training period setting step of setting a training period on the training information;
a skill/learning proficiency level determination step of determining a proficiency level of a skill/learning acquired from training information provided at the training information providing step after a training period set at the training period setting step ends; and
a skill/learning level comparison step of comparing a proficiency level of a skill/learning determined at the skill/learning proficiency level determination step with a target level of a skill/learning set at the skill/learning kind/target level set value input step.

A human-resource-development assisting method according to the eighth aspect of the invention comprises:
a skill/learning kind/target level set value input step of setting a kind and a target level of a skill/learning for accomplishing a business purpose;
a skill/learning current level determination step of determining a current level of a skill/learning corresponding to the kind of the skill/learning;
a skill/learning level difference calculation step of calculating a difference between a target level of a skill/learning and a current level of a skill/learning;
a training information providing step of providing training information to clear a difference calculated at the skill/learning level difference calculation step;
a skill/learning proficiency level determination step of determining a proficiency level of a skill/learning acquired from training information provided at the training information providing step; and
a skill/learning level achievement level determination step of comparing a proficiency level of a skill/learning determined at the skill/learning proficiency level determination step with a target level of a skill/learning set at the skill/learning kind/target level set value input step, and determining an achievement level.

An automatic application system according to the ninth aspect of the invention comprises:
recruitment information reception means for receiving recruitment information of a company;
student information reception means for receiving personal information of a student;
determination means for determining a student having a condition which matches a recruitment condition specified by recruitment information based on the recruitment information and the personal information;
application information creation means for creating application information for a student who is determined as to match the recruitment condition by the determination means to a company which offers a recruitment condition determined as to match; and
application information providing means for providing application information created by the application information creation means to a company subjected to application.

The determination means for example comprises:
standardization means for performing a standardization process of externalizing an application condition specified by personal information of a student; and extraction means for comparing an application condition standardized by the standardization means with a recruitment condition specified by recruitment information of a company, and extracting a student having an application condition which matches recruitment information.

The determination means for example comprises: recruitment condition standardizing means for externalizing a recruitment condition specified by the recruitment information of a company; application condition standardizing means for externalizing an application condition specified by the personal information of a student; and extraction means for extracting a student having a standardized application condition which matches a standardized recruitment condition based on an application condition standardized by the application condition standardization means and a recruitment condition standardized by the recruitment condition standardization means.

For example, the application information providing means asks a student, determined by the determination means as to have an application condition matching a recruitment condition specified by recruitment information, whether or not to file an application to a company, and provides application information to the company upon reception of an answer to the effect to file an application.

For example, the application information creation means creates an application resume based on personal information, and provides the created resume to a company subjected to an application.

An automatic application method according to the tenth aspect of the invention comprises:
receiving recruitment information of a company through a computer and saving that information;
receiving personal information of a student through a computer and saving that information;
determining a student having an application condition which matches a recruitment condition specified by recruitment information based on saved recruitment information and personal information;
creating application information of a student determined as to match a recruitment condition to a company offering a recruitment condition determined as to match; and
providing created application information to a company subjected to an application.

A recording device according to the eleventh aspect of the invention is a recording device having a memory which includes a predetermined program storing area and data area, and being mounted in a computer, and wherein
the predetermined program comprises:
a module which retrieves setting information of the computer in the data area when started;
a program module which accesses a predetermined human-resource-development assisting system or a predetermined automatic application system through a communication, and enables a use of the human-resource-development assisting system or the automatic application system; and
a delete module which deletes history information on an access using the recording device from the computer while terminating an access to the predetermined human-resource-development assisting system or the predetermined automatic application system,
with the recording device being mounted in the computer.

### Effect of the invention

According to the invention, it becomes possible to assist the development of human resources and to make a contribution to the selection of talented human resources.
Moreover, according to the invention, application and recruitment become simple and efficient.
Further, according to the invention, it becomes possible to use a computer safely.

### Brief Description of Drawings

FIG. 1 is a diagram showing the structure of a human-resource-development assisting system according to an embodiment of the invention;
Fig. 2 is a diagram showing the structure of a human-resource-development assisting device in FIG. 1;
FIG. 3 is a diagram showing the structure of a database in FIG. 1;
FIG. 4 is a diagram showing the structure of a target level information database;
FIG. 5 is a diagram showing the structure of a user information database;
FIG. 6 is a diagram showing the structure of a skill/learning information database;
FIG. 7 is a diagram showing the structure of a training information database;
FIG. 8 is a graph showing the relationship between a proficiency level and a training period;
FIG. 9 is a diagram showing an example of a menu page;
FIG. 10 is a flowchart for explaining a skill/learning registration process;
FIG. 11 is a diagram showing an example of a registration page;
FIG. 12 is a diagram showing another example of the registration page;
FIG. 13 is a flowchart for explaining a current level determination process;
FIG. 14 is a flowchart for explaining a difference calculation/training providing process;
FIG. 15 is a flowchart for explaining a proficiency level determination/instruction process;
FIG. 16 is a diagram for explaining proficiency level determination means;
FIG. 17 is a diagram showing the structure of a human-resource-development assisting system according to another embodiment of the invention;
FIG. 18 is a diagram for explaining proficiency level determination means in another embodiment;
FIG. 19 is a diagram showing the structure of a recruiting system according to the second embodiment of the invention;
FIG. 20 is a diagram showing the structure of a database in FIG. 19;
FIG. 21 is a flowchart for explaining a recruitment requirement registration process;
FIG. 22 is a diagram showing an example of a recruitment requirement registration screen;
FIG. 23 is a flowchart for explaining a student information registration process;
FIG. 24 is a diagram showing an example of a student information registration screen;
FIG. 25 is a flowchart for explaining a student information standardizing process;
FIG. 26 is a radar chart for explaining an example of standardizing personal information of a student;
FIG. 27 is a flowchart for explaining an introductory condition standardizing process;
FIG. 28 is a flowchart for explaining a matching process of extracting a student;
FIG. 29 is a flowchart showing a modified example of the matching process;
FIG. 30 is a block diagram for explaining an access tool according to the third embodiment of the invention;
FIG. 31 is a diagram showing an example of a program module stored in the access tool; and
FIG. 32 is a diagram showing an example of a screen for activating a program.

### Description of reference numerals

- 1: Human-resource-development assisting device
- 2: Database
- 3: Communication network
- 4: User terminal
- 5: Company terminal
- 11: Target level setting means
- 12: Training information providing means
- 13: Proficiency level determination means
- 14: Instruction means
- 111: Communication controller
- 112: Process controller
- 113: Data storing unit
- 21: Target level information database
- 22: User information database
- 23: Skill/learning information database
- 24: Training information database
- 25: Image information database
- 1001: Automatic application (introduction) system
- 1002: Database
- 1003: Communication network
- 1004: Student terminal
- 1005: Company terminal

### Best Mode for Carrying Out the Invention

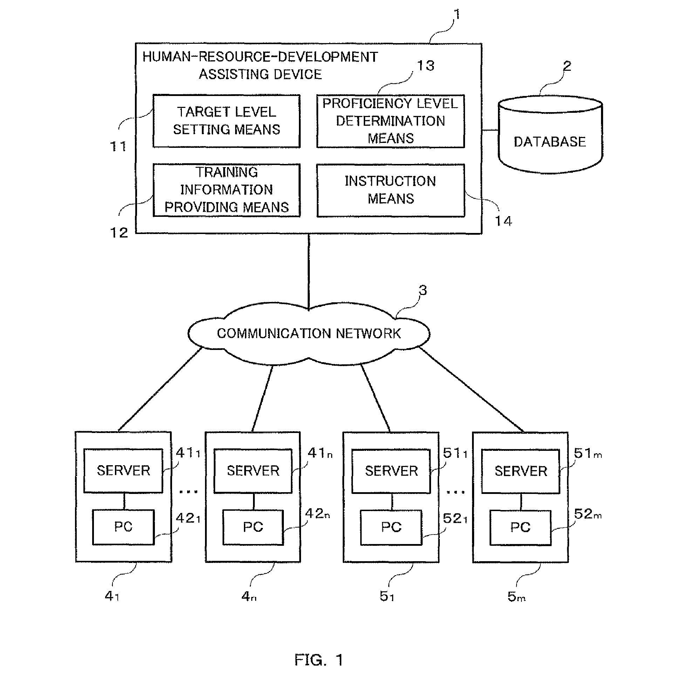

Hereinafter, an explanation will be given of a human-resource-development assisting system and a human-resource-development assisting method according to an embodiment of the invention with reference to the accompanying drawings. FIG. 1 is a diagram showing the structure of a human-resource-development assisting system.

As shown in FIG. 1, the human-resource-development assisting system comprises a human-resource-development assisting device 1, a database 2, a communication network 3, user terminals 4 (4₁ to 4ₙ) connected through the communication network 3, and company terminals 5 (5₁ to 5ₘ) connected through the communication network 3.

The human-resource-development assisting device 1 has target level setting means 11, training information providing means 12, proficiency level determination means 13, and instruction means 14.

The target level setting means 11is for setting the target level of a skill/learning, and has an input unit for setting, for example, the kind of a skill/learning and the target level thereof. Setting of the target level of a skill/learning through the target level setting means 11 may be executed plural times in accordance with utilization stages of the human-resource-development assisting system, and is not limited to one level. For example, a first target level may be set at an initial stage where the human-resource-development assisting system is used, and a second target level may be set at a stage where the skill/learning level of a user is improved through a training or the like. The first target level may include a basic requisite level for accomplishing the target level of a predetermined skill/learning, and the second target level may include a specific requisite level necessary for doing development and designing in a company to accomplish a business purpose.

The training information providing means 12 is for providing training information to accomplish a level set by the target level setting means 11. For example, the training information providing means 12 determines the current level of a skill/learning corresponding to the kind of a skill/learning, calculates a difference between the determined current level of the skill/learning and the target level of the skill/learning, and provides training information to clear the difference to a user terminal 4. The training information providing means 12 sets a training period in the training information.

The proficiency level determination means 13 determines the proficiency level of a skill acquired from the training information provided through the training information providing means 12. For example, the proficiency level determination means 13 determines the proficiency level of a skill/learning acquired from the training information provided by the training information providing means 12, after the end of a training period, compares the proficiency level of the skill/learning with the target level of a skill/learning set by the target level setting means 11, and determines the achievement level thereof. It is desirable that the proficiency level determination means 13 should comprise a plurality of evaluation/determination means. For example, the proficiency level determination means 13 is constituted by the most appropriate evaluation/determination system comprising a set of plural evaluation/determination means, and is always updated to the latest state.

The instruction means 14 instructs the user to do acquirement (to do training) through the training information provided by the training information providing means 12 until the user accomplishes a target level in a case where the determined level determined by the proficiency level determination means 13 is lower than the level set by the target level setting means 11.

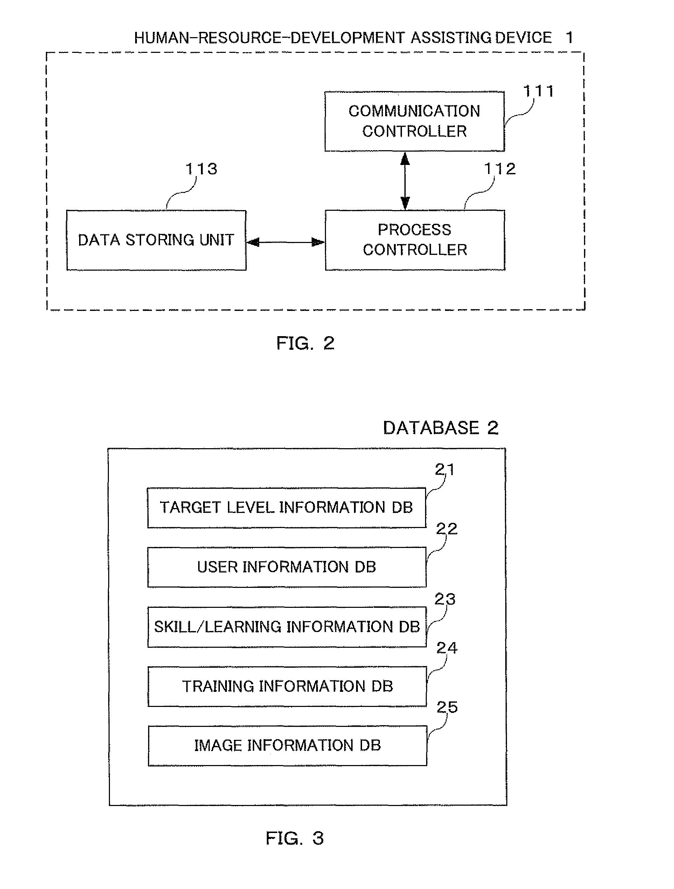

FIG. 2 shows the structure of the human-resource-development assisting device 1 having such individual means. As shown in FIG. 2, the human-resource-development assisting device 1 has a communication controller 111, a process controller 112, and a data storing unit 113.

The communication controller 111 comprises, for example, a predetermined communication device like a router, and connects the human-resource-development assisting device 1 with the communication network 3. The communication controller 111 performs transmission/reception of various data (information) with a user terminal 4 through the communication network 3.

The process controller 112 performs communication through the communication controller 111, processes various information, and functions as the foregoing individual means. The process controller 112 comprises, for example, a CPU (Central Processing Unit), and runs operational programs read out from the data storing unit 113 to execute various operations. Further, the process controller 112 creates image data.

The data storing unit 113 comprises, a semiconductor memory, a magnet disk recording device, or the like, and records various information and programs.

The database 2 is a database (DB) which stores various information on the human-resource-development assisting system. FIG. 3 shows the structure of the database 2. As shown in FIG. 3, the database 2 has a target level information DB 21, a user information DB 22, a skill/learning information DB 23, a training information DB 24, and an image information DB 25.

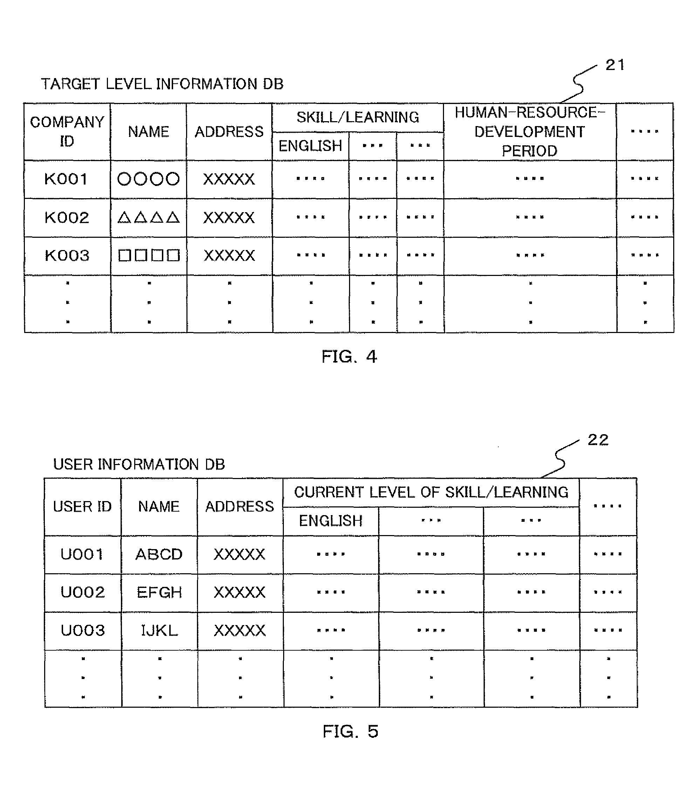

The target level information DB 21 is a database which stores information on the target level of a skill/learning required by a company or the like which carries out human resource training through the human-resource-development assisting system. As shown in FIG. 4, the target level information DB 21 stores, for example, a company ID, a company name, an address, a skill/learning, a human resource development period, and the like. The company ID is identification information for a company. The company name and address are the name and address of a company. The skill/learning is the kind of a skill/learning required by a company, and the target level thereof. The human resource development period is the period of a human resource development using the system.

The user information DB 22 is a database which stores information on a user who tries to improve a skill using the human-resource-development assisting system. As shown in FIG. 5, the user information DB 22 stores, for example, a user ID, a name, an address, a current level of a skill/learning, a mail address, a password, and the like. The skill is the kind of the skill of a user and the current level thereof determined at present. Further, the user information DB 22 stores information on a training (e.g., training number, training period) decided through a training decision process to be discussed later.

It is desirable that users should include students who want to get a job at a company, in addition to employees of that company which carries out human resource development using the human-resource-development assisting system. The company can get students having a skill that the company requests, and students can improve their skills, and have advantages to get a job at the desired company. Therefore, there are advantages to both sides of users of the system, resulting in acceleration of the use of the system.

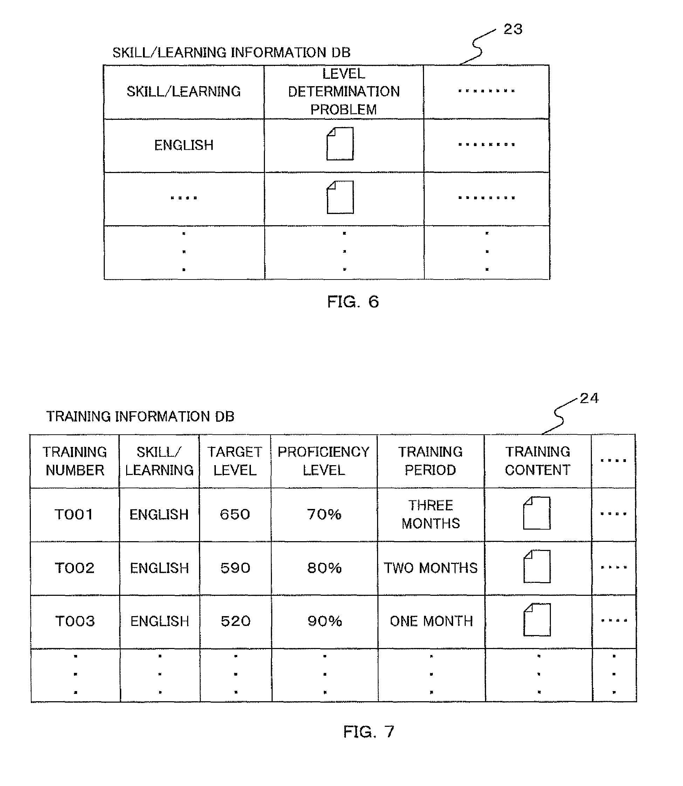

The skill/learning information DB 23 is a database which stores information on a skill/learning. As shown in FIG. 6, the skill/learning information DB 23 stores, for example, a skill/learning, a level determination problem, and a level determination answer, and the like. The level determination problem is a problem for determining the current level of the user and the proficiency level thereof after a training, and plural kinds of level determination problems are set for each skill. The level determination answer is an answer for a level determination problem. As will be discussed later, the human-resource-development assisting device 1 (process controller 112) transmits a level determination problem to a user terminal 4, and receives an answer for the level determination problem from the user. Based on the received answer and a level determination answer, the level of a skill/learning of the user is determined.

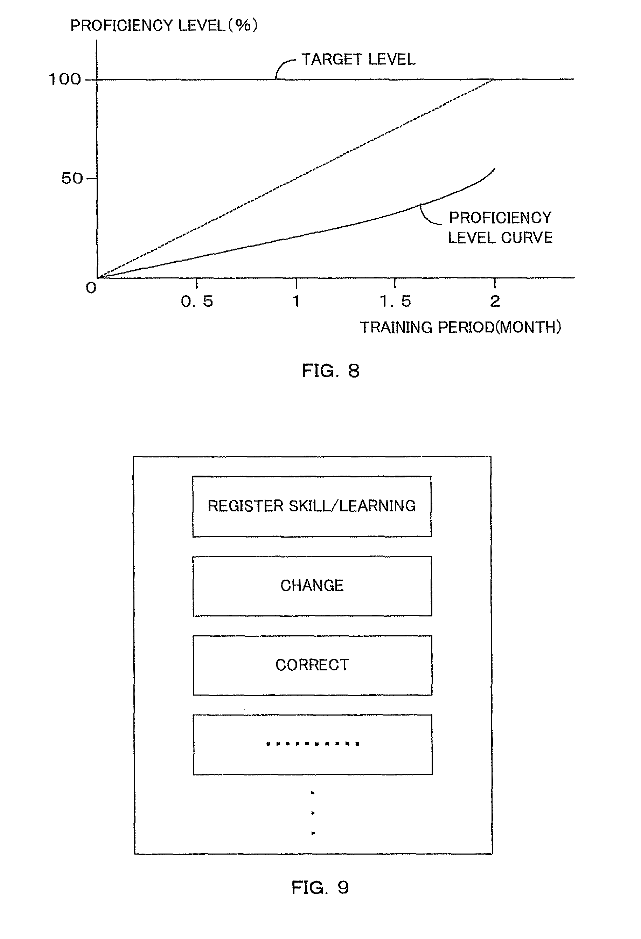

The training information DB 24 is a database which stores information on a training for improving the level of a skill/learning. As shown in FIG. 7, the training information DB 24 stores, for example, a training number, a skill/learning, a target level, a proficiency level, a training period, and a training content, and the like. For the training period, a preferable period is set based on a relationship between a proficiency level and a training period shown in FIG. 8. For example, an upskilling program for raising the level of a skill/learning is stored in the training content. The upskilling program sets a learning method or the like in a preset training period.

The image information DB 25 is a database which stores information constituting various images to be displayed at individual processes to be discussed later. The image information DB 25 stores images of various materials for creating images, and various forms.

The communication network 3 is a communication network, such as the Internet, a LAN (Local Area Network), a WAN (Wide Area Network) based on a predetermined communication protocol like TCP/IP (Transmission Control Protocol/Internet Protocol).

A user terminal 4 (4₁ to 4ₙ) comprises, a computer, a mobile terminal or the like having a communication function. As shown in FIG. 1, a user terminal 4 has, for example, a server 41 (41₁ to 41ₙ) and a PC 42 (42₁ to 42ₙ). A user terminal 4 is for a request to the human-resource-development assist system, an input and other operations thereto. The user terminal 4 is connected to the human-resource-development assisting device 1 through the communication network 3. Accordingly, the user is not limited to a resident of a country, but may include, for example, residents of respective plural countries.

A company terminal 5 (5₁ to 5ₘ) comprises, a computer, a mobile terminal or the like having a communication function. As shown in FIG. 1, a company terminal has, for example, a server 51 (51₁ to 51ₘ) and a PC 52 (52₁ to 52ₘ). A company terminal 5 is for a request to the human-resource-development assisting system, an input and other operations thereto.

Next, an explanation will be given of a human-resource-development assisting method using the human-resource-development assisting system structured as explained above. The explanation will be given of a pre-registration, a log-in, a skill/learning (kind, target level) registration process, a current level determination process, a difference calculation/training providing process, and a proficiency level determination/instruction process, in this order.

### (Pre-registration)

Preliminary registration to the human-resource-development assisting system is required before a user or a person in charge in a company uses the human-resource-development assisting system. Pre-registration to the human-resource-development assisting system will now be explained.

A person in charge in a company transmits information on a company name, an address, a mail address, and the like to the human-resource-development assisting device 1 through the communication network 3 from a company terminal 5. When receiving the information on the company name and the like, the human-resource-development assisting device 1 (process controller 112) issues a company ID and a password, and transmits the company ID and the password to the company terminal 5 via, for example, a mail. The process controller 112 registers transmitted predetermined information, the company ID and the password in the target level information DB 21.

On the other hand, as a user carries out the same operations through a user terminal 4, a user ID and a password are issued, and the user ID and the password are registered in the user information DB 22.

### (Login)

As the user or the person in charge in a company inputs an ID (login name) and a password, both transmitted at pre-registration, a connection to the human-resource-development assisting system is established.

When the person in charge in a company access, for example, a website provided by the human-resource-development assisting device through the communication network 3 from the company terminal 5, the process controller 112 performs user authentication. For example, a login screen page (information in the HTML format) is read out from the image information DB 25 and transmitted to the company terminal 5, and the person in charge in the company inputs the login name and the password, thus the user authentication is executed.

In a case where the process controller 112 determines that it is a registered company based on the transmitted login name and password, the process controller reads out, for example, information on a menu page (information in the HTML format) shown in FIG. 9 from the image information DB 25, transmits it to the company terminal 5, and the company terminal 5 displays the menu page. As shown in FIG. 9, the menu page has menu fields of, "register skill/learning" for registering the kind and the target level of a skill/learning, "change" for changing the set target level, "correct" for correcting the set kind and target level of the skill/learning, and the like.

In a case where the user logs in, the user accesses a website provided by the human-resource-development assisting device 1 through the communication network 3 from a user terminal 4, and performs the same process. This enables the user to transmit information on an answer for a level determination problem in a current level determination process or the like to be discussed later.

### (Skill/learning registration process)

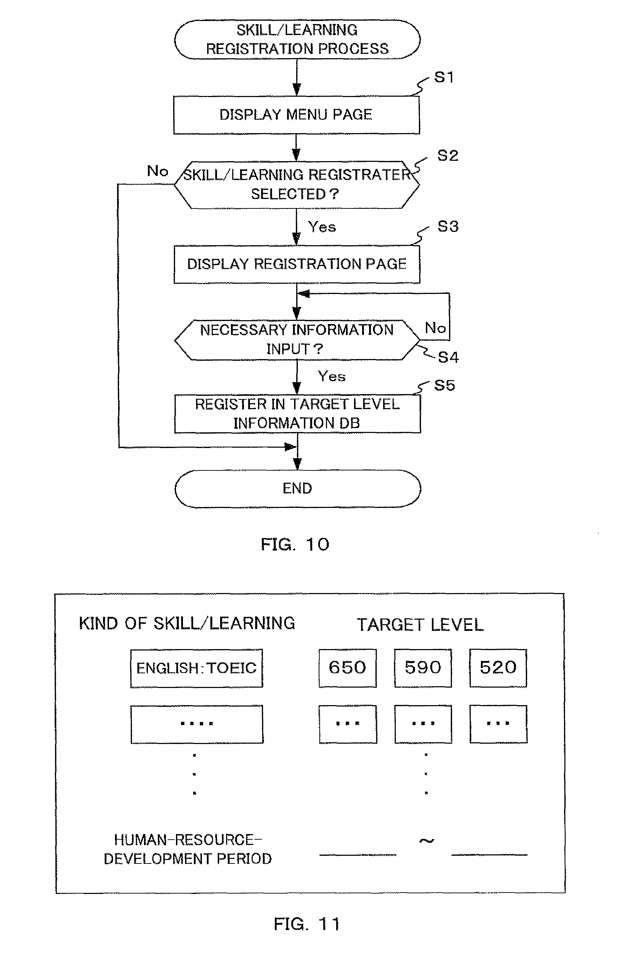

The skill/learning registration process is a process of registering (inputting) the kind and the target level of a skill/learning that the company (person in charge) requests to the user who uses the system, and the process is executed by the target level setting means 11. Hereinafter, the skill/learning registration process will be explained with reference to a flowchart of FIG. 10.

First, the target level setting means 11 (process controller 112) causes a company terminal 5 to display the menu page shown in FIG. 9 (step S1). Next, the process controller 112 determines whether or not the "skill/learning" is selected (clicked) through the menu page (step S2). That is, it is determined whether or not the person in charge in the company clicks the "skill/learning". When determining that the "skill/learning" is not clicked (step S2: No), the process controller 112 terminates the process.

When determining that the "skill/learning" is clicked (step S2: Yes), the process controller 112 reads out information on a registration page shown in FIG. 11 (information in the HTML format) from the image information DB 25, transmits it to the company terminal 5, and the company terminal 5 displays the registration page (step S3). The person in charge in the company decides the kind and the target level of a skill/learning that the company requests to a user based on the registration page displayed on the company terminal 5, and clicks the "transmit". Accordingly, a transmitted item is transmitted to the human-resource-development assisting device 1 (process controller 112).

Next, the process controller 112 determines whether or not necessary information is input (step S4). That is, the process controller 112 determines whether or not at least one skill is selected, and a level and a human-resource development period are set for the selected skill. When determining that necessary information is not input yet (step S4: No), the process controller 112 displays (transmits) information to the effect that necessary information is not input to the company terminal 5, and requests the person in charge to input necessary information again.

When determining that necessary information is input (step S4: Yes), the process controller 112 registers it in the target level information DB 21 (step S5), and then terminates the process.

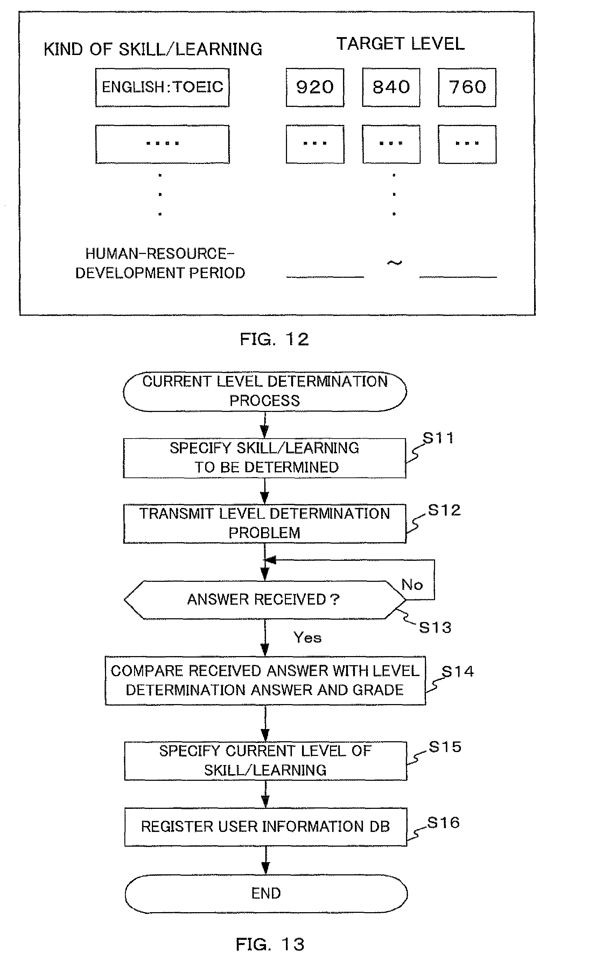

In a case where a target level is changed when the user has a training or the like and improves the level of a skill/learning of the user, the person in charge in the company selects the "change" from the menu page shown in FIG. 9. In this case, the process controller 112 reads out information on the registration page shown in FIG. 12 from the image information DB 25, and transmits it to the company terminal 5. The person in charge in the company executes the similar process, thereby changing the target level of a skill/learning.

Further, the person in charge in the company selects the "change" from the menu page shown in FIG. 9, and executes the similar process, thereby changing the content of the set skill/learning.

### (Current level determination process)

The current level determination process is a process of determining a current level of a skill/learning of a user, i.e., a current level of the user regarding a skill/learning, and the process is executed by the training information providing means 12. Hereinafter, the current level determination process will be explained with reference to a flowchart of FIG. 13.

When it becomes a predetermined period before a human-resource development period, the process controller 112 specifies a skill/learning that the company requests (determinates) to a user and which is stored in the target level information DB 21 (step S11). Next, for the specified skill/learning, the process controller 112 transmits a file of level determination problems stored in the skill/learning information DB 23 to a user terminal 4 (step S12). For example, in a case where a skill/learning that the company requests to a user is "English", a file of English level determination problems stored in the skill/learning information DB 23 is transmitted to the user terminal 4. When receiving the file of the level determination problems, the user solves the level determination problems, operates the user terminal 4 to transmit the answers to the human-resource-development assisting device 1 (process controller 112).

Subsequently, the process controller 112 determines whether or not the answers for the level determination problems are received from the user after a predetermined period (step S 13). When determining that the answers for the level determination problems are not received yet (step S13: No), the process controller 112 transmits information of prompting the user to transmit the answers for the level determination problems to the user terminal 4.

When determining that the answers for the level determination problems are received (step S 13: Yes), the process controller 112 compares the received answers with level determination answers stored in the skill/learning information DB 23 to do grading (step S14), and specifies the current level of the user for the skill/learning (step S15). Thereafter, the specified current level of the skill/learning is registered in the user information DB 22 (step S16), and the process is then terminated.

### (Difference calculation/training providing process)

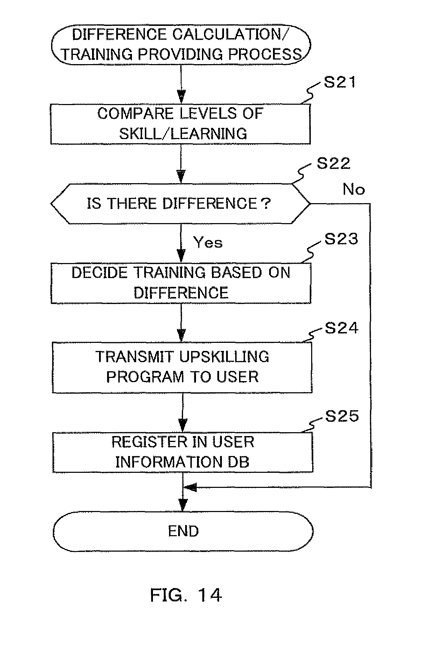

The difference calculation/training providing process is a process of providing a training for improving the level of a skill/learning of the user determined through the current level determination process to a target level, and the process is executed by the training information providing means 12. Hereinafter, the difference calculation/training providing process will be explained with reference to a flowchart of FIG. 14.

First, the process controller 112 compares a current level of a skill/learning determined through the current level determination process with the target level of the skill/learning stored in the target level information DB 21 (step S21). Next, the process controller 112 determines whether or not there is a difference therebetween for each skill (step S22). When determining that there is no difference for all skills/learnings (step S22: No), the process controller 112 terminates the process.

When determining that there is a difference therebetween (step S22: Yes), the process controller 112 specifies a training content to be carried out by the user for a skill/learning having that difference (step S23). That is, the process controller 112 decides a training based on the level of a target skill/learning stored in the training information DB 24.

When a training is decided, the process controller 112 transmits (provides) the training content of the decided training, i.e., an upskilling program thereof to the user terminal 4 (step S24). Thereafter, information on the training of the transmitted upskilling program is registered in the user information DB 22 (step S25), and the process is terminated.

### (Proficiency level determination/instruction process)

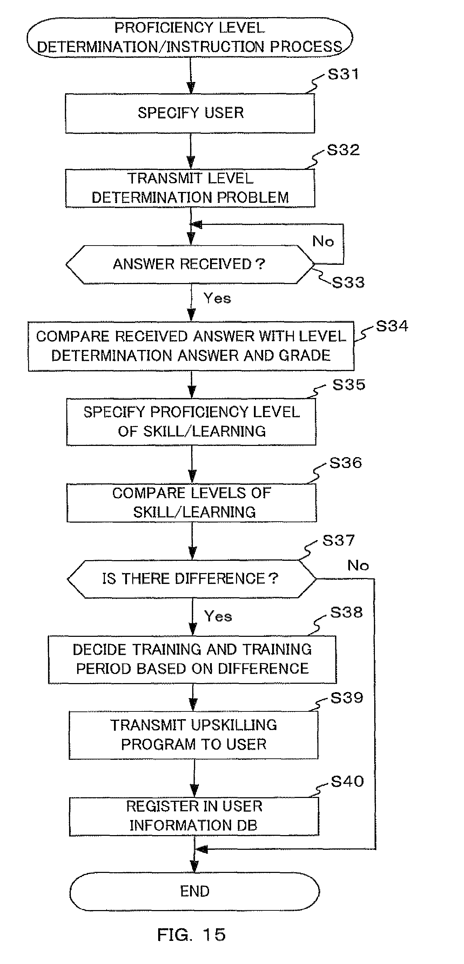

The proficiency level determination/instruction process is a process of determining the proficiency level of the user who completes a training provided through the difference calculation/training providing process, and of instructing the user to carry out the training until a target level is acquired when, for example, a determined proficiency level of the user is lower than the target level. The process is executed by the proficiency level determination means 13 and the instruction means 14. Hereinafter, the proficiency level determination process will be explained with reference to a flowchart of FIG. 15.

First, the process controller 112 specifies a user who has completed a training based on information on a training registered in the user information DB 22 (step S31). Next, the process controller 112 specifies a skill/learning subject to determination, and transmits a file of level determination problems stored in the skill/learning information DB 23 to the user terminal 4 for the specified skill/learning (step S32). When receiving the file of the level determination problems, the user solves the level determination problems, operates the user terminal 4 to transmit the answers thereof to the human-resource-development assisting device 1 (process controller 112).

Subsequently, the process controller 112 determines whether or not the answers of the level determination problems are received from the user after a predetermined period (step S33). When determining that answers for the level determination problems are not received yet (step S33: No), the process controller 112 transmits information of expecting the user to transmit the answers for the skill determination problems to the user terminal 4.

When determining that the answers for the level determination problems are received (step S33: Yes), the process controller 112 compares the received answers with level determination answers stored in the skill/learning information DB 23 to do grading (step S34), and specifies the proficiency level of the skill/learning of the user (step S35). Note that the specified proficiency level of the skill/learning is registered in the user information DB 22.

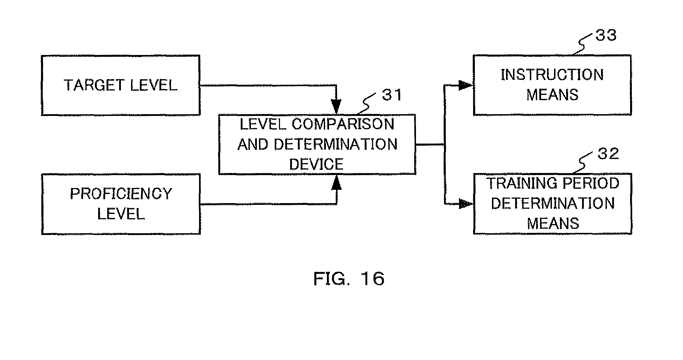

Next, the process controller 112 compares the determined proficiency level of the skill/learning with the target level of the skill/learning stored in the target level information DB 21, using, for example, a level comparison determination device 31 shown in FIG. 16 (step S36). In the comparison, it is determined whether or not there is a difference therebetween for each skill/learning (step S37). When determining that there is no difference for all skills/learnings (step S37: No), the process controller 112 terminates the process.

When determining that there is a difference therebetween (determined proficiency level of skill/learning is lower than target level) (step S37: Yes), the process controller 112 decides a training to be implemented by the user, for a skill/learning having the difference (step S38), and decides, for example, the training period of the training by training period deciding means 32 in accordance with the difference. In deciding the training period, the process controller 112 decides a predetermined period in consideration of, for example, a relationship between a proficiency level and a training period shown in FIG. 8. An upskilling program of the decided training is transmitted to the user terminal 4 (step S39). Information on the training of the transmitted upskilling program is registered in the user information DB 22 (step S40), and then the process is terminated. Note that the process controller 112 may not newly decide a training to be implemented by the user, but as shown in FIG. 16, instruction means 33 may instruct the user to have a training provided through the difference calculation/training providing process.

The proficiency level determination/instruction process is continued until the user accomplishes target skill levels for all skills. However, when a human-resource development period set by the company ends, the process also ends.

According to such a human-resource-development assisting method, it is possible to make a contribution to the improvement of a skill/learning of a user. Moreover, it is possible to make a contribution to the selection of a predetermined number of users having good skills from all users.

The present invention is not limited to the foregoing embodiment, and can be change and modified in various forms. Other applicable embodiments of the invention will now be explained.

After the proficiency level determination/instruction process ends, a screening process of selecting (screening) a person having a skill/learning that the company requests from all users may be executed. For example, the human-resource-development assisting device 1 (process controller 112) selects top several persons having high levels of skills/learnings from all users to execute screening of the users. The process controller 112 transmits the screening result to the company terminal 5 so that the company can select a predetermined number of users having high skills from all users. The screening scheme may set importance to a skill/learning, and applicants having an important skill/learning at a high level may be preferentially selected. Further, each skill/learning may be pointed in accordance with a level, and a user may be selected with reference to a sum of those points.

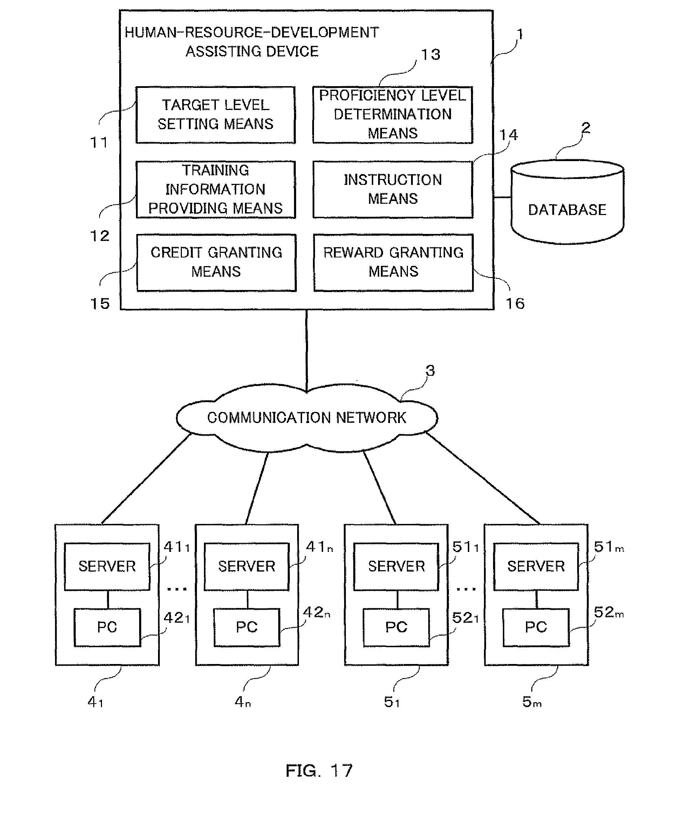

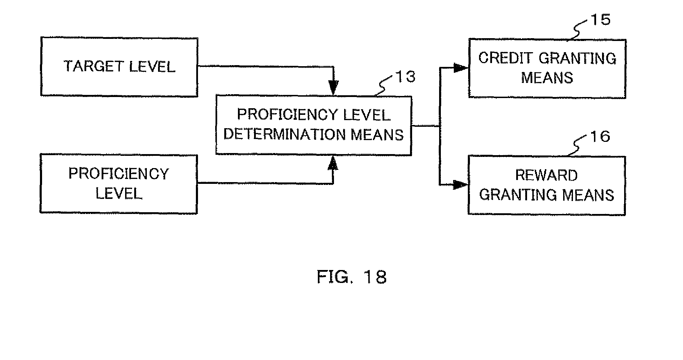

Moreover, as shown in FIG. 17, the human-resource-development assisting device 1 may have credit granting means 15 and reward granting means 16. As shown in FIG. 18, the credit granting means 15 is for granting a credit when the proficiency level of a skill/learning determined by the proficiency level determination means 13 is higher than a target level, and may be one which displays that a credit is granted. As shown in FIG. 18, the reward granting means 16 is for granting a reward when the proficiency level of a skill/learning determined by the proficiency level determination means 13 is higher than a target level, and may display a predetermined amount of reward.

Such a human-resource-development assisting method can be used for, for example, an employment exam of a company (selection method for people who want to have a job), a posting of a new recruit. Hereinafter, an explanation will be given of a case where the human-resource-development assisting method of the invention is applied to an employment exam.

The process controller 112 allows a company or the like which seeks an employee using the system to register in the system (target level information DB 21), and causes a person in charge in the company to execute a skill/learning registration process of setting a kind and a level of a skill that the company requests, and a human-resource development period. The process controller 112 recruits users, i.e., students who want to have a job at a particular company for example, and registers the students in the system (user information DB 22). Next, the process controller 112 executes the foregoing current level determination process, difference calculation/training providing process, and proficiency level determination/instruction process on the registered students, and causes the students to improve the skills. After a human-resource development period ends, a screening process is executed to select students having a high skill requested by the company.

In this manner, in a case where the human-resource-development assisting method of the invention is applied to an employment exam, the company can get students having a high skill that the company requests. On the other hand, the student can improve his/her skill, and can find a job at a desired company if a training result is good. In other words, according to the method of the invention, a student can have an opportunity to learn a basic knowledge, and this works as a bridge to a future job at a company, resulting in a chance to work at a company where the student wants to work so that it is a great advantageous to the student who plans to have a job after graduation.

It becomes possible to have students having a skill at a high level by setting a further high level for a skill and by executing the difference calculation/training providing process, the proficiency level determination/instruction process, and the screening process on students selected through a screening process. In this case, it is preferable that the first level of a skill should be set to a basic requisite level, and a next level of a skill should be set to a specific level that is necessary to do development and designing at a company. In this case, a so-called work-ready human resource can be obtained.

Likewise, in a case where the human-resource-development assisting method of the invention is used for the posting of a new recruit, the new recruit can improve the skill through the similar process, and it becomes possible to post the new recruit at the most suitable department in accordance with the skill of the new recruit.

According to the human-resource-development assisting system and the human-resource-development assisting method of the invention, a company can employ and get a student human resource (skill) that modem companies request to a student, e.g., a practical and good engineer expected by a market, and an employed student can attend a project of a company where the student wants to have a job, and utilizes knowledge and a skill learned in a school instantaneously as a member of the project, so that the system is an innovative system to both companies and students.

The system and the method of the invention can be divided into two phases based on a proficiency level of learning, presence/absence of a credit, presence/absence of a reward, and the like. In the first phase, for example, a basic training may be implemented for five months, and a reward may not be granted for the basic training period, a credit may not be granted, and both reward and credit may not be granted, according to the system.

A five-months basic training based on basic training information to acquire a level set by a first target level setting means for setting a target level of a learning and the first target level setting means is implemented, and the level and the skill of a student is intermediately evaluated several times during the training. Thereafter, a company can get a necessary human resource through an employment activity like an interview, and can settle recruitment.

After the training, a prospective employee may further have a practical training for five months. The second phase of the last half may be a part of a credited class in a university. According to the system and the method of the invention, it is possible to select a prospective employee while spending a sufficient time of five months, and a company training can be executed beforehand for a long period which is five months of the first phase, five months of the second phase, and a total of 10 months, so that it is advantageous to a company, a student, and those involved in a school or the like.

Implementation of a company training beforehand is novel, and is a characteristic of the invention. According to the system and the method of the invention, there is a large advantageous which can overcome a problem that companies have for a long time such that a skill of a student who file an application for a job with a company mismatches a human resource (skill) that the company requests.

In a case where a training of such a high level is implemented in a company, a large number of persons, a large amount of times, costs, and resources are required. In particular, a top-class human resource in a company must be in charge of an education to do a high-level education, and the regular work of the top-class human resource is disturbed. The present invention may be carried out at a company, or a company can have an education business as an outsourcing provider or may serve as both, and it is needless to say that selection and execution of the most appropriate method is possible according to needs.

Below is a summary of the characteristic part of the foregoing human-resource-development assisting method.
The method has the first human-resource-development phase and the second human-resource-development phase.
The first human-resource-development phase has a basic training for a predetermined period.
Intermediate evaluation is carried out after the basic training is executed for the predetermined period in the first human-resource-development phase.
A credit is granted in accordance with the proficiency level of a learning in the first human-resource-development phase.
After the intermediate evaluation, a student has an interview with a company, and the company gets necessary human resources, screens human resources, and then makes an official job offer in the first human-resource-development phase.
A practical training is executed for a predetermined period in the second human-resource-development phase.
A credit is granted in accordance with a proficiency level of a learning in the second human-resource-development phase.
A credit and a reward are granted in accordance with a proficiency level of a learning in the second human-resource-development phase.

In the foregoing embodiment, the explanation will be given of the example case where a user is caused to answer level determination problems and a current skill/learning of the user is determined based on the answer from the user in the current level determination process or the like, but various determination/evaluation systems may be used if the current level of a skill/learning of the user can be determined. The invention is not limited to a case where one determination/evaluation system is used, and may be applied to a case where plural determination/evaluation systems are combined in such a way that the most appropriate system is constituted.

Each company may individually cause the human-resource-development assisting device 1 to have a database which stores various contents, in particular, topic information and technical and economical information that attracts students' attentions and make the students to want to access, and such a database may be set as to be accessible to the students, thereby prompting more accesses and participations. A student may upload a blog. Further, a so-called community may be formed for students.

To train useful students to a company, an education and a learning having a goal in a predetermined period are necessary. It is extremely important how the education period is set and what education is carried out during that period.
To objectively decide the period and the education content, the system may execute a following process. For example, first, the human-resource-development assisting device 1 acquires a difference between a target level of a target student and the current level thereof. A period is set based on the difference and the fundamental skill of the student. Next, an education method is set based on the current level of the student. According to such a scheme, a period can be set reasonably.

### (Second Embodiment)

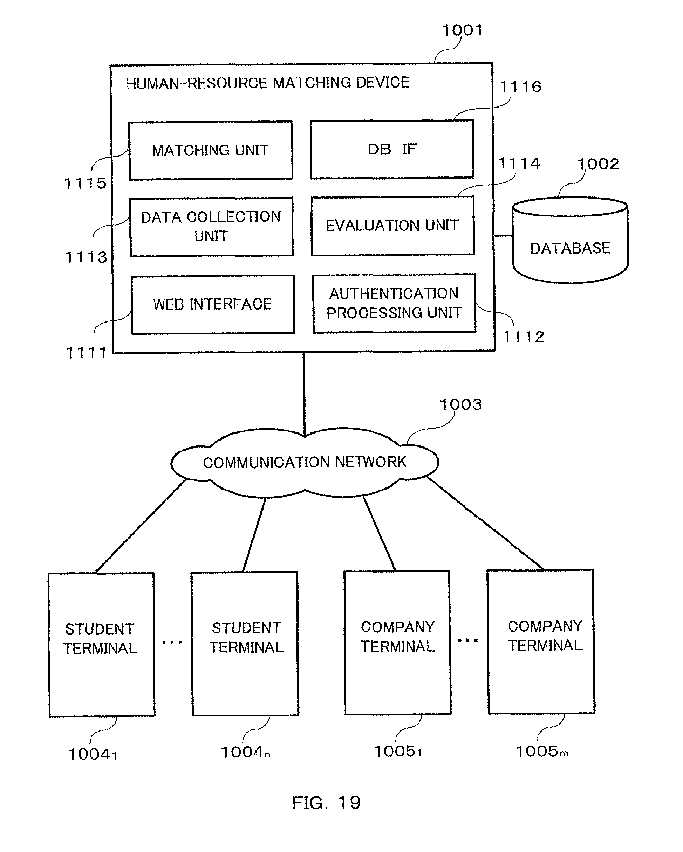

Next, an explanation will be given of an automatic application (introduction) system 1001 of the second embodiment of the invention with reference to FIGS. 19 to 32.

The automatic application system 1001 collects personal information on a student who is a user, and on the other hand, collects introduction conditions of each company which is also a user (conditions for a student that a company requests), automatically makes a resume of a student who matches an employment condition, automatically file an application to each company from the standpoint of a student, and introduces a student who matches an employment condition from the standpoint of a company.
FIG. 19 is a diagram showing the structure of the automatic application system 1001 of the second embodiment.

As shown in FIG. 19, the automatic application system 1001 has the same structure as that of the human-resource-development assisting device 1 shown in FIG. 1, is connected to a database 1002, and is connected to student terminals 1004 (1004₁ to 1004ₙ) and company terminals 1005 (1005₁ to 1005ₘ) through a communication network 1003.

The automatic application system 1001 has a web interface 1111, an authentication processing unit 1112, a data collection unit 1113, an evaluation unit 1114, a matching unit 1115, and a database (DB) interface (IF) 1116.

The web interface 1111 performs data communication with the student terminals 1004 and the company terminals 1005.

The authentication processing unit 1112 executes an authentication process. Authentication information is stored in the database 1002.

The data collection unit 1113 collects data (raw data) on each student from each student terminal 1004 through the web interface 1111. The data collection unit 1113 collects an introduction condition (condition that a student whom a company wants to introduce should satisfy) of each company from each company terminal 1005 through the web interface 1111.

The evaluation unit 1114 standardizes the evaluation of each student based on data collected by the data collection unit 1113, and creates evaluation data indicating standardized evaluation.

The matching unit 1115 performs matching (comparison) on a standardized evaluation result indicated by evaluation data created by the evaluation unit 1114 and the introduction condition of each company, extracts a student who matches a standard, and provides information on the extracted student to each company.

The database interface (DBIF) 1116 serves as an interface with the database 1002.

The automatic application system 1001 employs, for example, a structure shown in FIG. 2, and has a communication controller 111, a process controller 112, and a data storing unit 113.

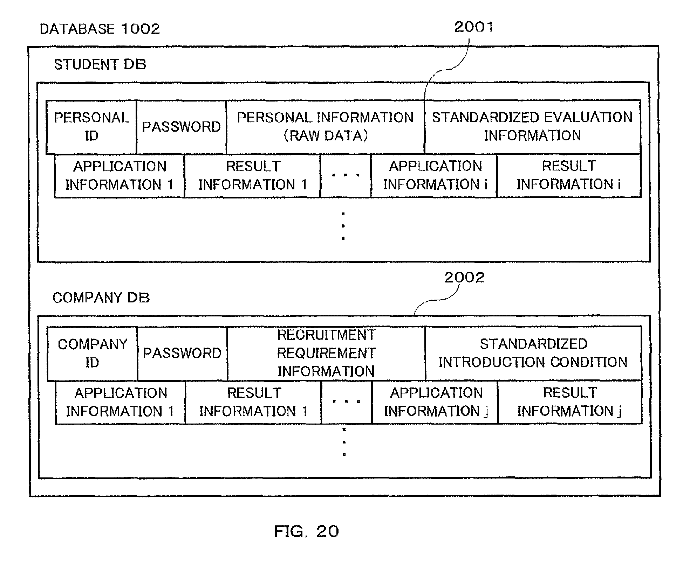

The database 1002 is a database (DB) which stores various information on the automatic application system 1001. As shown in FIG. 20, the database 1002 has a student DB 2001 and a company DB 2002.

The student DB 2001 stores an ID (identification information), a password, personal information, standardized evaluation information, application information, result information, and the like for each registered student. The ID (identification information) is identification information unique to the student. The password is information for authenticating the student. The personal information is personal information on the student, and includes personal attribute information on a name, an address, a contact address, and the like, and information on a job seeking field, a future perspective, an academic grade, and the like. The standardized evaluation information is evaluation data which externalizes the ability, motivation of the student specified from personal information. The application information and the result information are information on application to each company and information indicating the result thereof.

The company DB 2002 stores an ID (identification information), a password, a recruitment requirement information, standardized introduction condition information, application information, result information, and the like. The ID (identification information) is identification information unique to a company. The password is information for authenticating the company. The recruitment requirement information is the recruitment requirement of the company. The standardized introduction condition information is data which standardizes the condition that a student introduced to the company should satisfy. The application information and the result information are information on the application and information indicating the result thereof.

The communication network 1003 is a communication network, such as the Internet, a LAN (Local Area Network), or a WAN (Wide Area Network) base on a predetermined communication protocol like TCP/IP (Transmission Control Protocol/Internet Protocol).

The student terminal 1004 (1004₁ to 1004ₙ) comprises a computer, a mobile terminal or the like having a communication function. The student terminal 1004 is connected to the automatic application system 1001 through the communication network 1003, and is for a request to the automatic application system 1001, an input, and other operations thereto.

The company terminal 1005 (1005₁ to 1005ₘ) comprises a computer, a mobile terminal or the like having a communication function. The company terminal 1005 is connected to the automatic application system 1001 through the communication network 1003, and is for a request to the automatic application system 1001, an input, and other operations thereto.

Next, an explanation will be given of the operation of the automatic application system 100 structured as explained above.

### (Pre-registration)

It is necessary to do registration beforehand to the human-resource-development assisting system before a student or a person in charge in a company use the automatic application system 1001. The registration operation itself is the same as that in the first embodiment. Registration contents are stored in the database 1002.

### (Login)

As the user and the person in charge in the company inputs an ID (login name) and a password transmitted through pre-registration, a connection to the automatic application system 1001 is established. The login operation itself is the same as that of the first embodiment. The authentication processing unit 1112 determines whether or not a pair of input ID and password is registered in the database 1002, thereby executing user authentication.

### (Recruitment requirement registration process)

The recruitment requirement registration process is a process of registering a condition (standard condition, minimum condition, etc.,) that each company (person in charge in company) requests to a person who files an application with that company.

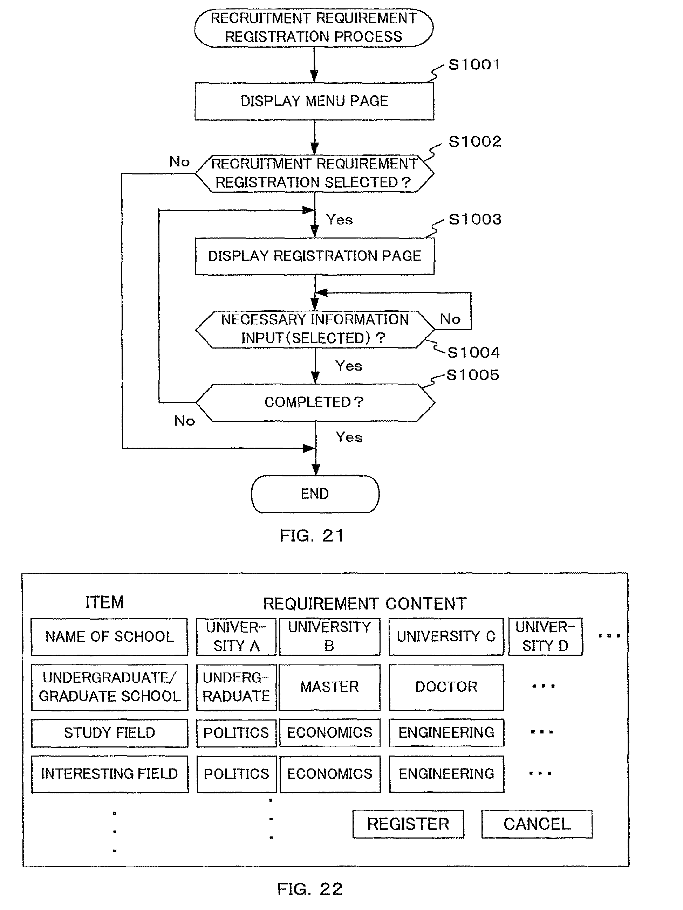

As the person in charge in the company logs in, the process controller 112 starts a process shown in FIG. 21.
First, the web interface 1111 (process controller 112) causes a company terminal 1005 to display a menu page exemplified in FIG. 9 (step S1001). Next, the process controller 112 determines whether or not the "register recruitment requirement" is selected (clicked) from the menu page (step S1002). That is, it is determined whether or not the person in charge in the company clicks the "register recruitment requirement"". When determining that the "register recruitment requirement" is not clicked (step S1002: No), the process controller 112 terminates the process.

When determining that the "register recruitment requirement" is clicked (step S1002: Yes), the process controller 112 transmits information on a registration page (information in the HTML format) exemplified in FIG. 22 to the company terminal 1005, and the company terminal 1005 displays the registration page (step S1003). The person in charge in the company inputs various conditions for a person that the company recruits in accordance with the registration page displayed on the company terminal 1005. It is supposed that the registration page employs a page structure having a large number of "selective" items as many as possible to suppress fluctuation of the registration contents by companies or persons in charge.

It is also supposed that the registration page employs a page structure such that a page switches when a "registration" button is pressed several items by several items. By employing such a structure, even if a registration work is interrupted in the middle, registration does not become in vain.

In a case where there is information already registered when the "registers recruitment requirement" is selected, the process controller 112 (web interface 1111) selects a page for registering information not registered yet, and transmits it to the company terminal 1005.

Next, the process controller 112 determines whether or not necessary information in the page is input (step S1004). That is, determination is carried out for each selection item. When determining that necessary information is not input yet (step S1004: No), the process controller 112 displays (transmits) information to the effect that necessary information is not input to the company terminal 1005, and prompts the person in charge in the company to input necessary information.

When determining that necessary information in the page is input (step S1004: Yes), the process controller 112 determines whether or not registration of all information is completed (step S1005), and when registration is completed, the process is terminated, and when registration is not completed yet, a page including data item to be input next is transmitted to the company terminal 1005 (step S1003). The same process is repeated until the completion of inputting.
The input recruitment requirement registration information is registered in the company DB 2002.

### (Student information registration process)

The process is of causing each student to register personal information other than login information, such as a gender, an age, the name of a belonging university, an undergraduate/graduate (master or doctor), a field where the student wants to have a job, a future perspective, wishes, and academic grades.

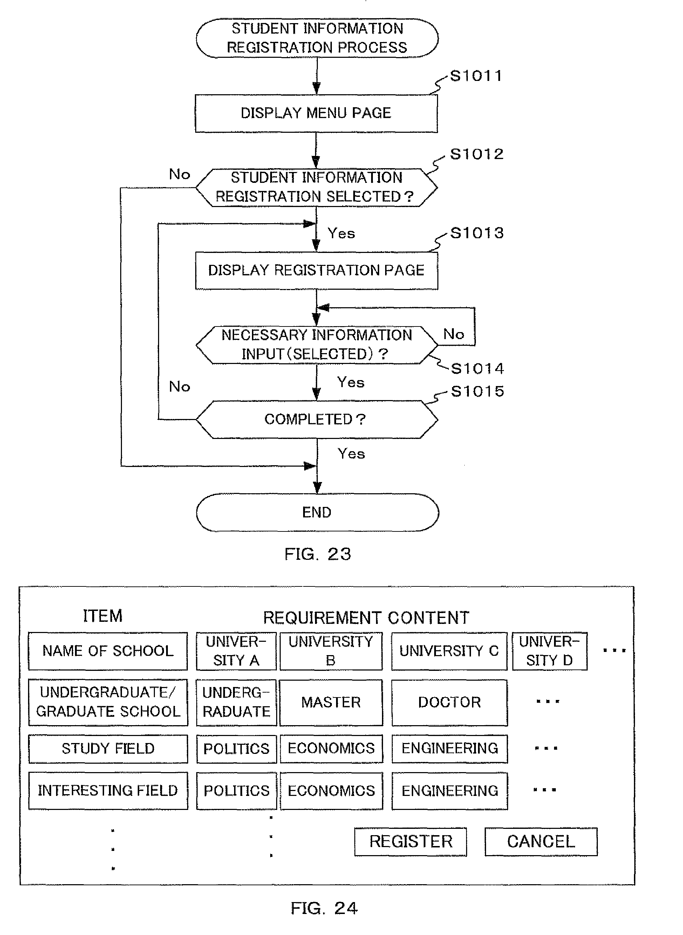

First, as the student logs in, the web interface 1111 (process controller 112) starts a process shown in FIG. 23, and causes a student terminal 1004 to display a menu page (step S1011). Next, the process controller 112 determines whether or not a "register student information" is selected (clicked) from the menu page (step S1012). That is, it is determined whether or not the "register student information" is clicked from the menu page. When determining that the "register student information" is not clicked (step S1012: No), the process controller 112 terminates the process.

When determining that the "register student information" is clicked (step S1012: Yes), the process controller 112 transmits information on a registration page (information in the HTML format) exemplified in FIG. 24 to the student terminal 1004, and causes the student terminal 1004 to display the registration page (step S1013). Each student registers all information useful for a job hunting, such as an academic background/a personal history, a specialized field, a research field and the result thereof, a field where the student wants to have a job, a company where the student wants to have a job, interests, a future perspective, a language skill, and a competency of the student, in accordance with the registration page displayed on the student terminal 1004. It is supposed that the registration page employs a page structure having a large number of "selective" items as many as possible to suppress fluctuation of registration contents by different students.

It is also supposed that the registration page employs a page structure that a page switches when a "registration" button is pressed several items by several items. By employing such a structure, even if a registration work is interrupted in the middle, registration does not become in vain.
In a case where there is information already registered when the "register personal information" is selected, the process controller 112 selects a page for registering information not registered yet, and transmits it to the student terminal 1004.

Next, the process controller 112 determines whether or not information necessary in the page is input (step S1014). That is, determination is carried out for each selection item. When determining that necessary information is not input (step S1014: No), the process controller 112 displays (transmits) information to the effect that necessary information is not input to the student terminal 1004, and prompts the student to input necessary information.

When determining that necessary information is input in the page (step S1014: Yes), the process controller 112 determines whether or not registration of all information is completed (step S1015), and when registration is completed, the process is terminated, and when registration is not completed yet, an input page including data item to be input next is transmitted to the student terminal 1004 (step S1013).

The process controller 112 (data collection unit 1113 and DBIF 1116) stores input student information in association with an ID in the student DB 2001.

### (Student information processing (standardization) process)

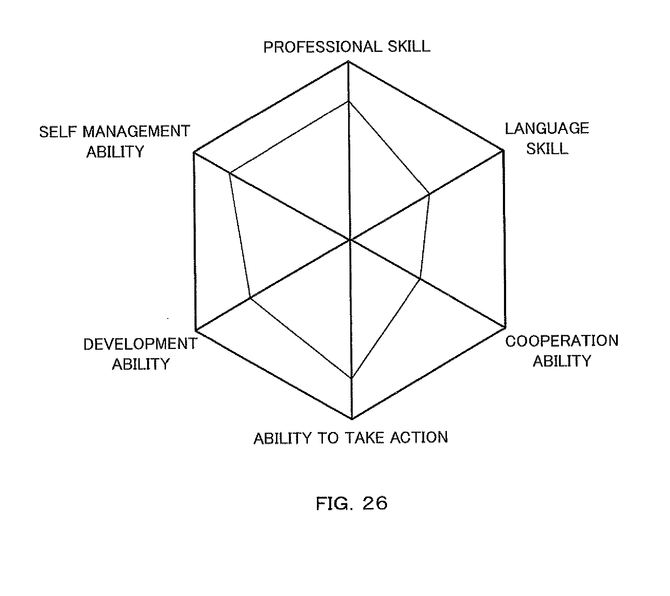

The evaluation unit 1114 (process controller 112) of the automatic application system 1001 executes a student information processing process of externalizing input information of each student based on student information (raw information) newly registered and student information updated and collected, in the midnight for example, and of creating standardized(normalized) evaluation information.
The process is a process of externalizing an academic skill, language skill, ability to take an action, direction of interest, future directivity and the like of each student, and makes a radar chart shown in FIG. 26.

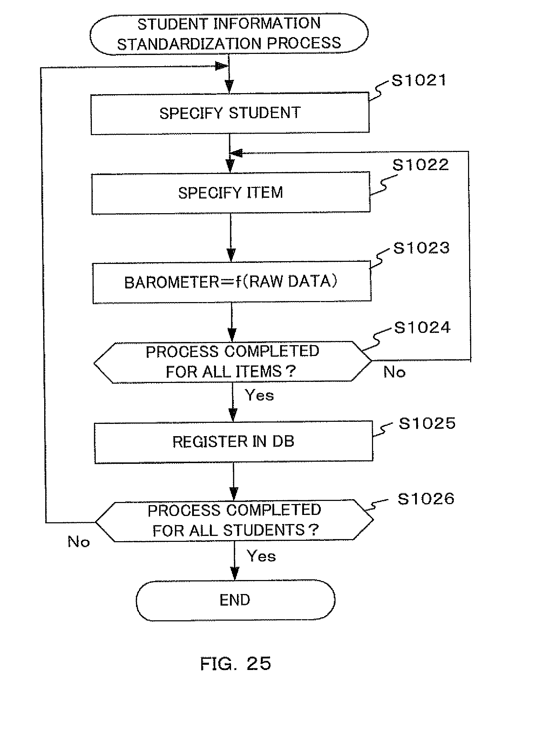

To do the process, the evaluation unit 1114 (process controller 112) starts a process shown in FIG. 25, and first, specifies one student (step S1021). Next, items on a radar chart to be created are specified (step S1022).

Next, based on raw data input by the student, an objective barometer is acquired for a selected item (step S1023).
The barometer can be acquired using the scheme of data mining. For example, a predetermined parent population is selected beforehand, and the scheme of data mining is applied to the parent population, thereby acquiring a function between a parameter and a barometer. The parameter of a student is put into the function f, thereby acquiring a barometer = f (parameter).

Regarding a language skill or the like, for example, a correspondence relation between each certification exam (e.g., TOEFL, TOEIC) and a barometer is acquired beforehand, and the point of each exam is converted into a barometer.

Subsequently, it is determined whether or not barometers are acquired for all items of one student (step S1024), and when a process is completed for all items (step S1024: Yes), acquired barometers are registered in association with the student in the student DB 2001 of the database 1002 (step S1025).

On the other hand, when an unprocessed item remains (step S1024: No), the process returns to the step S1022, a next item is set and the process progresses.

When the process for one student is completed (step S 1024: Yes), it is determined whether or not the processes for all student that personal information thereof are updated are completed (step S1026), and when it is not completed yet (step S 1026: No), a next student is selected (step S1021), the same process is executed, and when the processes for all students are completed, the batch process of this time is then terminated.

In this way, the database 1002 stores up standardized and externalized evaluation data for each student.

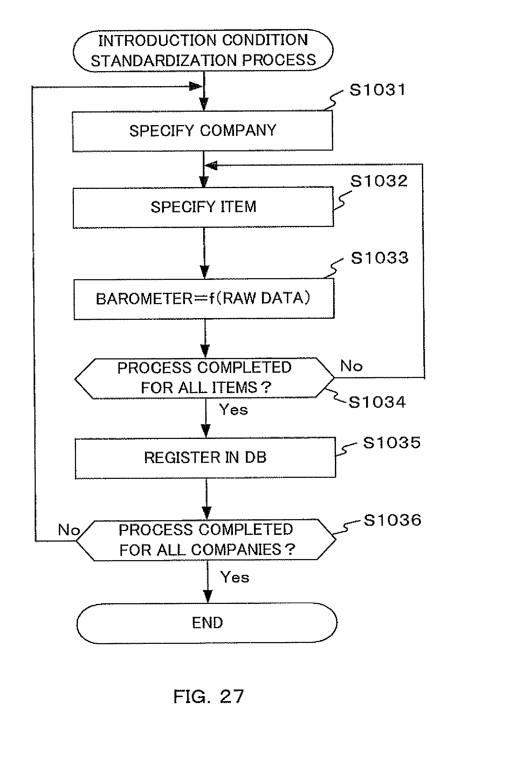

On the other hand, the automatic application system 1001 performs the same process on an introduction condition (request specification) of each company to externalize it.
That is, as shown in FIG. 27, the evaluation unit 1114 (process controller 112) specifies one participating company (step S1031). Next, items on a radar chart to be created are specified (step S1032).

Next, an objective barometer for a selected item is acquired based on an introduction condition set by the person in charge in the company (step S1033).
The barometer can be obtained by, for example, selecting a predetermined parent population beforehand, applying the scheme of data mining to the parent population, acquiring a function g between an input value and a barometer, and putting an individual input value into the function g.
Regarding a language skill or the like, a correspondence relation between each certification exam (e.g., TOEFL, TOEIC) and a barometer is acquired beforehand, and the point of each exam is converted into a barometer.

Subsequently, it is determined whether or not barometers are acquired for all items of the company (step S1034), when the processes of all items are completed (step S1034: Yes), acquired barometers are registered in association with a student in the database 1002 (step S1035).

On the other hand, when an unprocessed item remains (step S1034; No), the process returns to the step S1032, a next item is set and the process progresses.
When the process for one company is completed (step S1034: Yes), it is determined whether or not the processes for all companies are completed (step S1036), and when it is not completed (step S1036: No), a next company is selected (step S1031), the same process is executed, and when the processes for all companies are completed (step S1036: Yes), the introduction condition standardizing process of this time is terminated.

### (Introduction of student to each company)

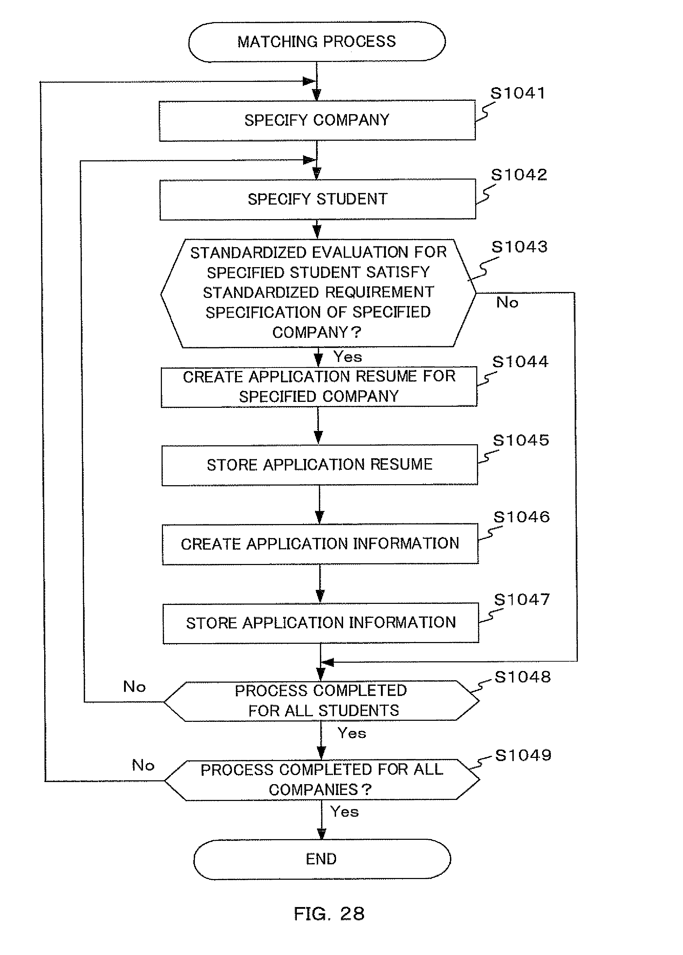

When it becomes a timing to introduce a human resource to each company, the matching unit 1115 (process controller 112) executes a matching process shown in FIG. 28, specifies a company subjected to introduction, and extracts students applicable to the company.
First, the process controller 112 specifies one participating company (step S1041). Next, a student is specified (step S1042).

Next, it is determined whether or not the standardized evaluation for the specified student satisfies the standardized introduction condition of the company (step S1043).
In this determination process, what criterion the determination is based on is optional to determine whether or not it is applicable, and for example, it may be determined as introducible (applicable) only when the evaluations of the student satisfy the requirement specifications of the company in all items, or merely one or two items may be exceptional, etc.
Further, the field that the student wants to have a job and the field that the company seeks an employment are also in consideration.

When the standardized evaluation for the specified student satisfies the standardized introduction condition of the specified company (step S1043: Yes), the personal information of the student registered in the student DB 2001 is synthesized into the form of a preset resume to create a resume exclusive for the company (step S1044). Next, the resume is registered as application information of an applicant in the area for the company in the company DB 2002 of the database 1002 (step S1045). At this stage, an application is to be filed to the recruitment of the company.

Subsequently, application information indicating that the student applies to the company is created (step S1046), and the application information is registered in the area for the student in the student DB 2001 of the database 1002 (step S1047).

Subsequently, it is determined whether or not the processes for all students are completed (step S1048), and when it is not completed yet (step S1048: No), the process returns to the step S1042, a next student is specified, and the same process is executed.

On the other hand, when the processes for all students are completed (step S1048: Yes), it is then determined whether or not the processes for all companies are completed (step S1049), and when it is not completed yet (step S 1049: No), the process returns to the step S 1041, a next company is specified and the same process is executed.
Finally, when it is determined that the processes for all companies are completed (step S1049: Yes), the matching process at this time is then terminated.

In this manner, the objective evaluation for a student is subjected to matching with an objective introduction condition of each company, and the student who matches the requirement of the company is automatically applied to the recruitment of the company.

### (Examination in each company)

The person in charge in each company operates the company terminal 1005, accesses the area for that company in the company DB 2002 of the database 1002, acquires application information (resume), examines it, and determines whether or not to employ.

The person in charge in the company notifies an employment/non-employment result to the automatic application system 1001 in a predetermined format.
The process controller 112 of the automatic application system 1001 registers employment/non-employment information as result information in both student DB 2001 and company DB 2002 in the database 1002.

The student accesses the automatic application system 1001, sees the result information, thereby coming to know a pass/fail status. The automatic application system 1001 may transmits/notifies the result information to a registered address through an email or the like.

As explained above, according to the embodiment, (i) personal information which is input by each student and is objective to some extent is standardized, (ii) introduction information which is input by each company and is objective to some extent is standardized, and (iii) a student having a standardized evaluation matching the standardized introduction information of each company is extracted, and is automatically applied to the company.
Therefore, the student can efficiently apply to the company, and the company can efficiently employ the student.

The present invention is not limited to the foregoing embodiment, and can be changed and modified in various forms.
For example, the evaluation of a student and the requirement specification of a company are both standardized, but only the evaluation for a student may be normalized and the introduction condition of a company may be used as it is. For example, the introduction condition of a company may be normalized (converted into an absolute value) to some extent, an input introduction condition may be compared with the standardized evaluation for a student, a student which matches the introduction condition may be extracted, and then an application may be automatically filed with the company.

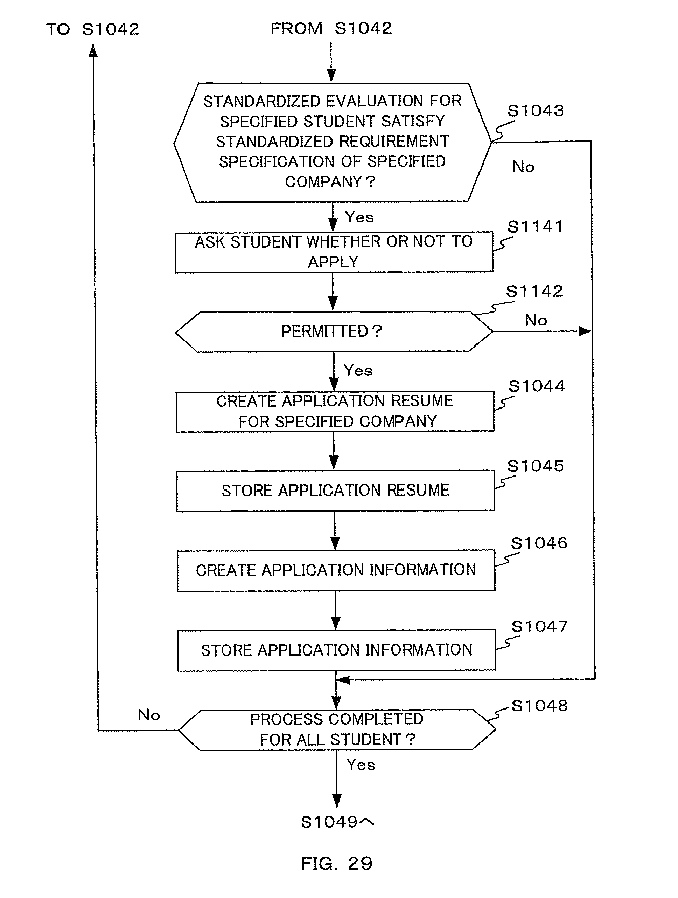

It is structured in such a way that an application is automatically filed when the evaluation for a student satisfies the requirement specification, but the student may be asked whether or not "to file an application", and only when the student agrees with filing an application, a resume may be created and filed.
In this case, for example, as shown in FIG. 29, in the step S1043, when it is determined that the evaluation for the student satisfies the introduction condition of the company, an inquiry whether or not to file an application is sent to the student through an HTML mail or the like (step S1141), and only when there is a response from the student that the student wants to file an application (step S 1142: Yes), the process following to the step S1044 is executed, and an application is filed with the company. On the other hand, when there is a response from the student that the student does not want (rejects) to apply (step S 1142: No), the following process like creating a resume is not executed, and the process shifts to a process for a next student.

Further, according to the foregoing explanation, matching of plural companies with all students is carried out at some point, but at a time when each company provides a recruitment requirement or at a time when an introduction condition is issued, a student may be selected (extracted), and an application may be filed to the recruitment.

### (Third Embodiment)

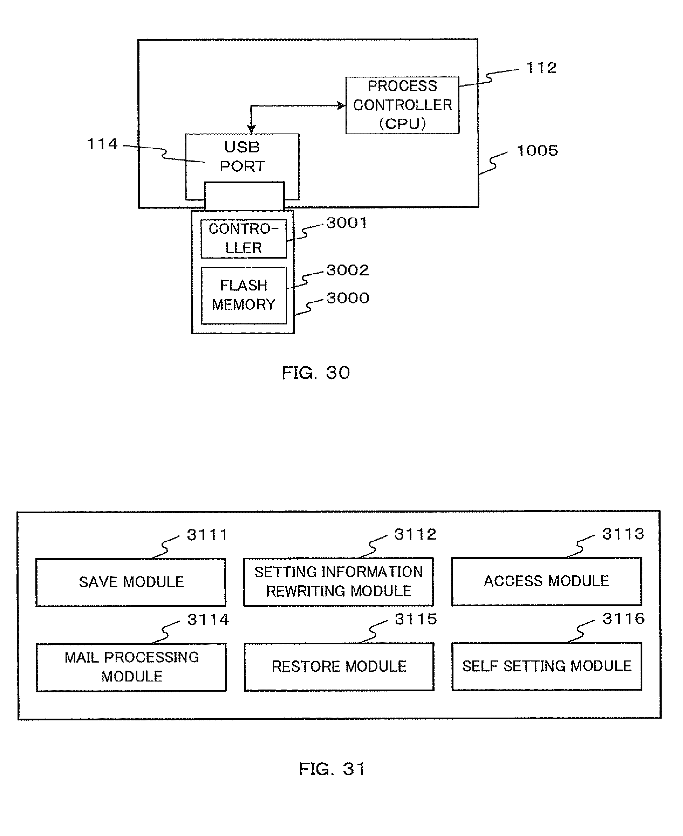

Some of the students cannot have an exclusive computer or a computer that the student owns by himself/herself. On the other hand, when a computer is shared, personal information remains in the computer, and there is a risk that the personal information leaks. In this case, it is effective to lend an access tool 3000 shown in FIG. 30 to each student.

The access tool 3000 comprises a USB memory or the like, and the memory has a controller 3001 and a flash memory 3002, and has a USB plug which is to be connected to the USB port of a computer.

The flash memory 3002 stores a setting program for setting a computer to be exclusive.

As shown in FIG. 31, the setting program has a save module 3111 which saves the setting information (registry information or the like) of a computer just before the setting program is started, a setting information rewriting module 3112 which rewrites various setting information to exclusive information, an access module 3113 which automatically establishes a connection to the human-resource-development assisting device 1 or the automatic application system 1001 to access it, a mail processing module 3114 which receives electronic mails and saves those in the flash memory 3002, a restore module 3115 which restores the settings at the end of a process, and deletes history information, cookies, temporal files in a computer, and a self-setting module 3116 which stores setting information of a local mailer (mail software) or the like.

In the example, the save module 3111 to the restore module 3115 are constituted as one execution file "access. exe", and the self-setting module 3116 is constituted as one execution file "mail setting. exe".

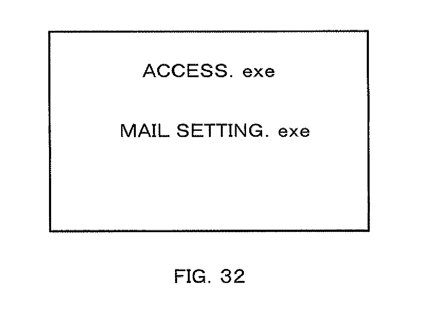

A student who is provided with the access tool 3000 loads the access tool 3000 into the USB port 114 of an arbitral computer.
As the access tool is loaded into the USB port 114, the process controller 112 displays a screen exemplified in FIG. 32.

First, the user starts the mail setting. exe. Accordingly, the self-setting module 3116 is started. As started, the self-setting module 3116 controls the process controller 112, and displays an input screen for inputting an account of an electronic mail service provided by a provider of the user, an address of a POP server, an address of an SMTP server, an account of an reception mail server, a password, and the like.

The student (user) inputs such information provided from the provider of the user into the displayed input screen, and instructs the process controller 112 to save information.
The process controller 112 stores the input information in the flash memory 3002 through the controller 3001, and terminates the process.
Note than information such as "my favourite", "bookmark", and "history" of a browser may be set through the process.

Next, an explanation will be given of an example case where the user (student) accesses the human-resource-development assisting device 1 or the automatic application system 1001 from an arbitral computer disposed at an Internet café or a school.
In this case, as shown in FIG. 30, the student mounts the access tool 3000 into the USB port 114 of a computer 1005. The computer 1005 detects the loading of the access tool, and displays a menu shown in FIG. 32.

The user starts the "access.exe".
In response to this operation, first, the save module 3111 is started, and saves the setting information of a mailer of the computer 1005, the setting information of a browser, a current time, and the like in the flash memory 3002. Next, the setting information, rewriting module 3112 is started.

The setting information rewriting module 3112 rewrites the setting of the mailer to information provided from the provider stored in the flash memory 3002. Likewise, in a case where the setting of a browser is stored, such information is also rewritten. Accordingly, a computer disposed at an Internet cafe or a school is set as if it serves as a computer owned by the user. That is, the computer 1005 serves as a student terminal 1004. Next, the access module 3113 and the mail processing module 3114 are started.

As the access module 3113 is started, the process controlled 112 is controlled to do automatic access to the URL of a login page of the human-resource-development assisting device 1 or the automatic application system 1001, and to start a browser. At this stage, the user inputs an ID and a password in the login page to enter a site. The ID and the password may be automatically input. Thereafter, various inputs and processes explained in the first and second embodiments are carried out.
As the mail processing module 3114 is started, a mailer already set is started, a11 mails to the user are downloaded, displayed through a list, and stored in the flash memory 3002.

Afterward, the user uses the browser and the mailer, or another arbitral application program installed in the computer 1005 to execute necessary processes.
The user can access a site other than the human-resource-development assisting device 1 or the automatic application system 1001, and transmit/receive a mail to/from an arbitrary address.

To terminate the use of the computer 1005, the restore module 3115 is started through a predetermined operation (e.g., operating a termination button disposed in a screen). As the restore function module 3115 is started, the restore module saves information on the user (information from a saved start time to a current time) in information remaining in the mailer and the browser in the flash memory 3002. Subsequently, the setting of the mailer is rewritten to the saved information, the setting of the browser is rewritten to the saved information, and file information, such as access history information, cookies, temporary files, and Internet temporary files from the saved time to a current time are all deleted to prevent the leak of information to other persons.
Finally, the restore module 3115 executes a disconnection process in such a way that the access tool 3000 can be removable from the USB port 114.

According to such a structure, each student can easily and safely access the human-resource-development assisting device 1 or the automatic application system 1001 from a computer other than a computer owned by himself/herself, register self information and receive an application result.

The third embodiment is also not limited to the foregoing explanation, and can be changed and modified in various forms. For example, for a user who owns a computer, registry information of that computer may be stored in the flash memory 3002, and registry information of an Internet cafe may be rewritten to those values. Moreover, how much a restore process is executed is optional.

Note that it is needless to say that a system may be applied to a combined embodiment of the first to third embodiments and executed.

The human-resource-development assisting device 1 and the automatic application system 1001 according to the embodiments of the invention can be realized by a normal computer system, not an exclusive system. For example, the human-resource-development assisting device 1 which executes the foregoing processes can be realized by, for example, installing a program for executing the foregoing processes in a general-purpose computer from a recording medium (flexible disk, CD-ROM, or the like) which stores the foregoing program.

The scheme of providing such a program is arbitrary. As explained above, the program can be provided through a predetermined recording medium, and can be provided through, for example, a communication line, a communication network, or a communication system. In this case, for example, the program may be placed on a bulletin board (BBS) of a communication network, and may be superimposed on a carrier wave to provide the program. The foregoing processes can be executed by starting the program provided in this manner and executing it under the control of an OS like other application programs.

### Industrial Applicability

The present invention can be applied to an education field, and recruiting and employment fields.

## Claims

1. A human-resource-development assisting system comprising:
first target level setting means for setting a target level of a learning;
training information providing means for providing training information to acquire a level set by the first target level setting means; and
proficiency level determination means for determining a proficiency level of a skill acquired from training information provided by the training information providing means.

2. A human-resource-development assisting system comprising:
first target level setting means for setting a target level of a learning;
training information providing means for providing training information to acquire a level set by the first target level setting means;
proficiency level determination means for determining a proficiency level of a skill acquired from training information provided by the training information providing means; and
instruction means for giving an instruction on an acquisition from training information provided by the training information providing means until a first target level is acquired when a determined level determined by the proficiency level determination means is lower than a level set by the first target level setting means.

3. A human-resource-development assisting system comprising:
second target level setting means for setting a target level having a higher level than first target level setting means for setting a target level of a learning;
training information providing means for providing training information to acquire a level set by the second target level setting means; and
proficiency level determination means for determining a proficiency level of a skill acquired from training information provided by the training information providing means.

4. A human-resource-development assisting system comprising:
second target level setting means for setting a target level having a higher level than first target level setting means for setting a target level of a learning;
training information providing means for providing training information to acquire a level set by the second target level setting means;
proficiency level determination means for determining a proficiency level of a skill acquired from training information provided by the training information providing means; and
instruction means for giving an instruction on an acquisition from training information provided by the training information providing means until a second target level is acquired when a determined level determined by the proficiency level determination means is lower than a level set by the second target level setting means.

5. The human-resource-development assisting system according to claim 1, further comprising means for granting a credit when a proficiency level is higher than a first target level upon determination by the proficiency level determination means.

6. The human-resource-development assisting system according to claim 3, further comprising means for granting a reward when a proficiency level is higher than a second target level upon determination by the proficiency level determination means.

7. The human-resource-development assisting system according to claim 3, further comprising means for granting a credit and a reward when a proficiency level is higher than a second target level upon determination by the proficiency level determination means.

8. A human-resource-development assisting system comprising:
skill/learning kind/target level set value input means for setting a kind and a target level of a skill/learning;
skill/learning current level determination means for determining a current level of a skill/learning corresponding to the kind of the skill/learning;
skill/learning level difference calculation means for calculating a difference between a target level of a skill/learning and a current level of a skill/learning;
training information providing means for providing training information to clear a difference calculated by the skill/learning level difference calculation means;
training period setting means for setting a training period on the training information;
skill/learning proficiency level determination means for determining a proficiency level of a skill/learning acquired from training information provided by the training information providing means after a training period set by the training period setting means ends; and
skill/learning level comparison means for comparing a proficiency level of a skill/learning determined by the skill/learning proficiency level determination means with a target level of a skill/learning set by the skill/learning kind/target level set value input means.

9. A human-resource-development assisting system comprising:
skill/learning kind/target level set value input means for setting a kind and a target level of a skill/learning for accomplishing a business purpose;
skill/learning current level determination means for determining a current level of a skill/learning corresponding to the kind of the skill/learning;
skill/learning level difference calculation means for calculating a difference between a target level of a skill/learning and a current level of a skill/learning;
training information providing means for providing training information to clear a difference calculated by the skill/learning level difference calculation means;
skill/learning proficiency level determination means for determining a proficiency level of a skill/learning acquired from training information provided by the training information providing means; and
skill/learning level achievement level determination means for comparing a proficiency level of a skill/learning determined by the skill/learning proficiency level determination means with a target level of a skill/learning set by the skill/learning kind/target level set value input means, and determining an achievement level.

10. The human-resource-development assisting system according to claim 9, further comprising credit granting display means for displaying a granting of a credit when a proficiency level is higher than a target level of a skill/learning input by the skill/learning kind/target level set value input means upon determination of the skill/learning level achievement level determination means.

11. The human-resource-development assisting system according to claim 9, further comprising reward amount display means for displaying a predetermined reward amount when a proficiency level is higher than a target level of a skill/learning input by the skill/learning kind/target level set value input means.

12. The human-resource-development assisting system according to claim 9, further comprising credit granting display means for displaying a granting of a credit and reward amount display means for displaying a predetermined reward amount when a proficiency level is higher than a target level of a skill/learning input by the skill/learning kind/target level set value input means.

13. The human-resource-development assisting system according to claim 9, further comprising instruction means for giving an instruction on an acquisition from training information provided by the training information providing means when a proficiency level through the skill/learning level achievement level determination means is lower than a target level of a skill/learning input by the skill/learning kind/target level set value input means.

14. The human-resource-development assisting system according to claim 9, further comprising instruction means for giving an instruction on an acquisition from training information provided by the training information providing means until a proficiency level exceeds a target level of a skill/learning when the proficiency level determined by the skill/learning level achievement level determination means is lower than a target level of a skill/learning input by the skill/learning kind/target level set value input means.

15. The human-resource-development assisting system according to claim 8, wherein a target level of a skill/learning input by the skill/learning kind/target level set value input means is a basic requisite level to acquire a target level of a predetermined skill/learning.

16. The human-resource-development assisting system according to claim 8, wherein the skill/learning proficiency level determination means comprises a plurality of evaluation/determination means.

17. The human-resource-development assisting system according to claim 8, wherein the skill/learning proficiency level determination means is constituted by an evaluation/determination system comprised of a best combination of plural evaluation/determination means.

18. The human-resource-development assisting system according to claim 8, wherein a target level of a skill/learning input by the skill/learning kind/target level set value input means is a specific requisite level necessary for being capable of development and designing in a company to accomplish a business purpose.

19. The human-resource-development assisting system according to claim 18, further comprising examination means for performing examination regarding recruitment in a company when a proficiency level of a skill/learning determined by the skill/learning proficiency level determination means is higher than a specific requisite level input by the skill/learning kind/target level set value input means.

20. The human-resource-development assisting system according to claim 17, wherein the evaluation/determination system is updated to a latest state.

21. The human-resource-development assisting system according to claim 8, wherein an inputting of a kind and a target level of a skill/learning by the skill/learning kind/target level set value input means, a determination of a current level of a skill/learning by the skill/learning current level determination means, a calculation of a difference by the skill/learning level difference calculation means, a provision of training information by the training information providing means, a determination of a proficiency level of a skill/learning by the skill/learning proficiency level determination means, and a comparison of a proficiency level with a target level by the skill/learning level comparison means are executed through network communication means.

22. A human-resource-development assisting method comprising:
a skill/learning kind/target level set value input step for setting a kind and a target level of a skill/learning;
a skill/learning current level determination step of determining a current level of a skill/learning corresponding to the kind of the skill/learning;
a skill/learning level difference calculation step of calculating a difference between a target level of a skill/learning and a current level of a skill/learning;
a training information providing step of providing training information to clear a difference calculated at the skill/learning level difference calculation step;
a training period setting step of setting a training period on the training information;
a skill/learning proficiency level determination step of determining a proficiency level of a skill/learning acquired from training information provided at the training information providing step after a training period set at the training period setting step ends; and
a skill/learning level comparison step of comparing a proficiency level of a skill/learning determined at the skill/learning proficiency level determination step with a target level of a skill/learning set at the skill/learning kind/target level set value input step.

23. A human-resource-development assisting method comprising:
a skill/learning kind/target level set value input step of setting a kind and a target level of a skill/learning for accomplishing a business purpose;
a skill/learning current level determination step of determining a current level of a skill/learning corresponding to the kind of the skill/learning;
a skill/learning level difference calculation step of calculating a difference between a target level of a skill/learning and a current level of a skill/learning;
a training information providing step of providing training information to clear a difference calculated at the skill/learning level difference calculation step;
a skill/learning proficiency level determination step of determining a proficiency level of a skill/learning acquired from training information provided at the training information providing step; and
a skill/learning level achievement level determination step of comparing a proficiency level of a skill/learning determined at the skill/learning proficiency level determination step with a target level of a skill/learning set at the skill/learning kind/target level set value input step, and determining an achievement level.

24. An automatic application system comprising:
recruitment information reception means for receiving recruitment information of a company;
student information reception means for receiving personal information of a student;
determination means for determining a student having a condition which matches a recruitment condition specified by recruitment information based on the recruitment information and the personal information;
application information creation means for creating application information for a student who is determined as to match the recruitment condition by the determination means to a company which offers a recruitment condition determined as to match; and
application information providing means for providing application information created by the application information creation means to a company subjected to application.

25. The automatic application system according to claim 24, wherein the determination means comprises:
standardization means for performing a standardization process of externalizing an application condition specified by personal information of a student; and
extraction means for comparing an application condition standardized by the standardization means with a recruitment condition specified by recruitment information of a company, and extracting a student having an application condition which matches recruitment information.

26. The automatic application system according to claim 24, wherein the determination means comprises:
recruitment condition standardizing means for externalizing a recruitment condition specified by the recruitment information of a company;
application condition standardizing means for externalizing an application condition specified by the personal information of a student; and
extraction means for extracting a student having a standardized application condition which matches a standardized recruitment condition based on an application condition standardized by the application condition standardization means and a recruitment conditions standardized by the recruitment condition standardization means.

27. The automatic application system according to claim 24, wherein the application information providing means asks a student, determined by the determination means as to have an application condition matching a recruitment condition specified by recruitment information, whether or not to file an application to a company, and provides application information to the company upon reception of an answer to the effect to file an application.

28. The automatic application system according to claim 24, wherein the application information creation means creates an application resume based on personal information, and provides the created resume to a company subjected to an application.

29. An automatic application method comprising:
receiving recruitment information of a company through a computer and saving that information;
receiving personal information of a student through a computer and saving that information;
determining a student having an application condition which matches a recruitment condition specified by recruitment information based on saved recruitment information and personal information;
creating application information of a student determined as to match a recruitment condition to a company offering a recruitment condition determined as to match; and
providing created application information to a company subjected to an application.

30. A recording device having a memory which includes a predetermined program storing area and data area, and being mounted in a computer, and wherein
the predetermined program comprises:
a module which retrieves setting information of the computer in the data area when started;
a program module which accesses a predetermined human-resource-development assisting system or a predetermined automatic application system through a communication, and enables a use of the human-resource-development assisting system or the automatic application system; and
a delete module which deletes history information on an access using the recording device from the computer while terminating an access to the predetermined human-resource-development assisting system or the predetermined automatic application system,
with the recording device being mounted in the computer.
